(19) **Europäisches Patentamt**
**European Patent Office**
**Office européen des brevets**

(11) **EP 4 492 658 A1**

(12) **EUROPEAN PATENT APPLICATION**

(43) Date of publication:
**15.01.2025 Bulletin 2025/03**

(21) Application number: **24186671.4**

(22) Date of filing: **04.07.2024**

(51) International Patent Classification (IPC):
**H02M 1/00** *(2006.01)* **H02M 3/158** *(2006.01)*

(52) Cooperative Patent Classification (CPC):
**H02M 1/009; H02M 1/0032; H02M 3/1582**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 US 202363513084 P**
**03.07.2024 US 202418762862**

(71) Applicant: **Analog Devices International Unlimited Company**
**Co. Limerick (IE)**

(72) Inventors:
• **MASINI, Marco**
**Co. Limerick (IE)**
• **GEORGES, Jeremy**
**Wilmington, 01887 (US)**
• **PATTI, Giuseppe**
**Co. Limerick (IE)**

• **MAZZONE, Angelo**
**Co. Limerick (IE)**
• **MITA, Rosario**
**Co. Limerick (IE)**
• **DI CERA, Manuel**
**Co. Limerick (IE)**
• **PORCELLI, Ivan**
**Co. Limerick (IE)**
• **CHRISTO, Forrest**
**Wilmington, 01887 (US)**
• **DOWLING, Frank**
**Wilmington, 01887 (US)**
• **CONSOLI, Elio**
**Co. Limerick (IE)**
• **BELLUCO, Gianluca**
**Co. Limerick (IE)**

(74) Representative: **Horler, Philip John**
**Withers & Rogers LLP**
**2 London Bridge**
**London SE1 9RA (GB)**

(54) **POWER MANAGEMENT DEVICES INCLUDING MULTIPLE INPUT PORTS, AND ASSOCIATED SYSTEMS AND METHODS**

(57) A power management device includes a first input port configured to be electrically coupled to an energy source, a second input port configured to be electrically coupled to a capacitor, a first output port configured to be electrically coupled to a first load, and a direct-current-to-direct-current (DC-to-DC) converter. The DC-to-DC converter is configured to (a) charge the capacitor from energy of the energy source and (b) provide energy to the first output port at least partially using energy stored in the capacitor. The energy source includes, for example, a battery.

*FIG. 9*

EP 4 492 658 A1

## Description

### BACKGROUND

Batteries are commonly used to provide power to electronic devices, such as mobile electronic devices. It is frequently desirable that a mobile electronic device have a small form factor. As such, batteries in mobile electronic devices often need to have a small form factor.

### SUMMARY

In an embodiment, a power management device including multiple input ports includes (a) a first input port configured to be electrically coupled to an energy source, (b) a second input port configured to be electrically coupled to a first capacitor, (c) a first output port configured to be electrically coupled to a first load, and (d) a direct-current-to-direct-current (DC-to-DC) converter configured to (i) charge the first capacitor from energy from the energy source and (ii) provide energy to the first output port at least partially using energy stored in the first capacitor.

In an embodiment, a method for powering one or more loads using a power management device includes (a) charging a first capacitor using energy from an energy source, using an inductor of a first direct-current-to-direct-current (DC-to-DC) converter, (b) providing energy to a first load from energy stored in the first capacitor, using the inductor of the first DC-to-DC converter, and (c) transferring energy stored in a second capacitor to the first capacitor, using the inductor of first DC-to-DC converter, the second capacitor being electrically coupled to the first load.

In an embodiment, an electrical system incudes (a) an energy source, (b) a first capacitor, (c) a first load, and (d) a power management device. The power management device includes (i) a first input port electrically coupled to the energy source, (ii) a second input port electrically coupled to the first capacitor, (iii) a first output port electrically coupled to the first load, and (iv) a direct-current-to-direct-current (DC-to-DC) converter configured to (a) charge the first capacitor from energy of the energy source, and (b) provide energy to the first load at least partially using energy stored in the first capacitor.

### BRIEF DESCRIPTION OF THE DRAWINGS

FIG. 1 is an electrical model of a battery.
FIG. 2A is a graph of an example of current versus time in the FIG. 1 battery.
FIG. 2B is a graph of an example of voltage versus time in the FIG. 1 battery.
FIG. 3 is a block diagram of an electrical system including a power management device, according to an embodiment.
FIG. 4 is a block diagram of the FIG. 3 electrical system illustrating an input energy transfer mode.
FIG. 5 is a block diagram of the FIG. 3 electrical system illustrating an output energy transfer mode.
FIG. 6 is a block diagram of the FIG. 3 electrical system illustrating another output energy transfer mode.
FIG. 7 is a block diagram of the FIG. 3 electrical system illustrating a discharge energy transfer mode.
FIG. 8 is a block diagram of the FIG. 3 electrical system illustrating another discharge energy transfer mode.
FIG. 9 is a schematic diagram of one possible embodiment of a DC-to-DC converter of the FIG. 3 power management device.
FIG. 10 includes five graphs illustrating one example of a controller generating controls signals to cause a buck-boost converter of FIG. 9 to operate in an input energy transfer mode.
FIG. 11 includes five graphs illustrating another example of a controller generating controls signals to cause the FIG. 9 buck-boost converter to operate in an input energy transfer mode.
FIG. 12 includes five graphs illustrating an additional example of a controller generating controls signals to cause the FIG. 9 buck-boost converter to operate in an input energy transfer mode.
FIG. 13 includes five graphs illustrating one example of a controller generating controls signals to cause the FIG. 9 buck-boost converter to operate in an output energy transfer mode.
FIG. 14 includes five graphs illustrating an example of a controller generating controls signals to cause the FIG. 9 buck-boost converter to operate in a discharge energy transfer mode.
FIG. 15 includes five graphs illustrating one example of a controller generating controls signals to cause the FIG. 9 buck-boost converter to operate in a discharge energy transfer mode.
FIG. 16 includes five graphs illustrating a further example of a controller generating controls signals to cause the FIG. 9 buck-boost converter to operate in an input energy transfer mode.
FIG. 17 includes five graphs illustrating a further example of a controller generating controls signals to cause the FIG. 9 buck-boost converter to operate in an output energy transfer mode

FIG. 18 is a state diagram illustrating one example of how the DC-to-DC converter of the FIG. 3 power management device may transition between energy transfer modes.

FIG. 19 includes three graphs illustrating one example of operation of the FIG. 3 electrical system according to the state diagram of FIG. 18.

FIG. 20 illustrates an alternate embodiment of the FIG. 18 state diagram.

FIG. 21 includes three graphs illustrating one example of operation of the FIG. 3 electrical system according to the state diagram of FIG. 20.

## DETAILED DESCRIPTION OF THE EMBODIMENTS

Batteries having a small form factor, such as micro-batteries, may be used in size-sensitive applications, such as in wearable electronic device applications and in Internet of Things (IoT) applications. Example of batteries that may have a small form factor include, but are not limited to, silver oxide batteries, lithium thionyl chloride batteries, lithium manganese dioxide batteries, and zinc air batteries. However, batteries having a small form factor typically exhibit a high impedance and low specific power, which may be problematic in some applications.

For example, mobile electronic devices increasingly have large peak electrical loads. For example, a wellness wearable electronic device implementing photoplethysmography (PPG) may have peak loads of 250 milliamperes (mA) or more, and motors in wearable drug delivery pumps may have peak loads in excess of 800 mA. As another example, Internet of Things (IoT) devices including narrowband (Nb) radios may have peak loads of more than 800 mA. Such high peak loads may cause excessive drop in battery voltage if the battery has a high impedance.

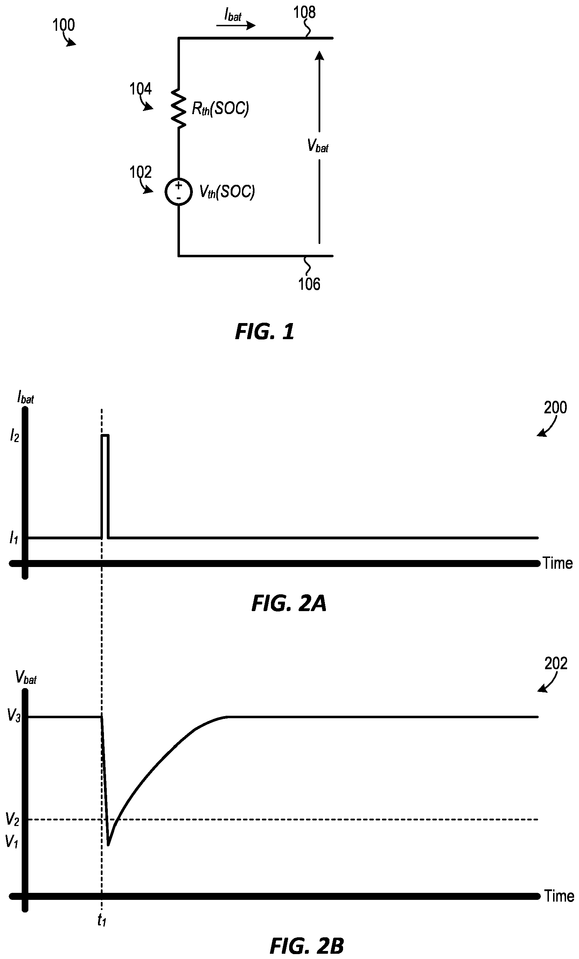

For example, FIG. 1 is an electrical model of a battery 100. Battery 100 is modeled in FIG. 1 by a voltage source 102 and an impedance element 104 electrically coupled in series between a first battery output node 106 and a second battery output node 108. Battery 100 has a battery voltage $V_{bat}$ between second battery output node 108 and first battery output node 106, and battery 100 has a current $I_{bat}$ flowing between first battery output node 106 and second battery output node 108. Voltage source 102 is an ideal voltage source having a voltage magnitude $V_{th}$ that is a function of state of charge (SOC) of battery 100, and impedance element 104 has an impedance $R_{th}$ that is also a function of state of charge of battery 100. A relationship between voltage $V_{bat}$ and current $I_{bat}$ may be expressed by EQN. 1 below.

$$V_{bat} = V_{th}(SOC) - I_{bat} \cdot R_{th}(SOC) \quad \text{(EQN. 1)}$$

As evident from EQN. 1, battery voltage $V_{bat}$ drops with increasing impedance $R_{th}$ and with increasing current $I_{bat}$. Therefore, a large peak current load may result in a large drop in battery voltage $V_{bat}$ if $R_{th}$ is large. For example, FIGS. 2A and 2B are graphs 200 and 202, respectively, which collectively illustrate one example of operation of battery 100 when subjected to a large peak current load. Graph 200 is a graph of current $I_{bat}$ versus time, and graph 202 is a graph of voltage $V_{bat}$ versus time. Graphs 200 and 202 have a common time base. Current $I_{bat}$ initially has a magnitude of $I_1$, but current $I_{bat}$ jumps to a magnitude of $I_2$ at time $t_1$ for a short period of time in response to a peak load. The spike in current at time $t_1$ causes voltage $V_{bat}$ to momentarily drop from a magnitude of $V_3$ to a magnitude of $V_1$, and voltage $V_{bat}$ subsequently rebounds to a magnitude of $V_3$. If a load powered by battery 100 has an minimum operating voltage of $V_2$, the drop in battery voltage $V_{bat}$ at time $t_1$ will cause voltage supplied to the load to be out of specification, possibly resulting in improper operation of the load. Accordingly, high impedance of a battery in an electronic device may cause improper operation of the electronic device when the battery is subjected to large peak loads. Additionally, certain battery types may be damaged by large peak currents.

Disclosed herein are power management devices and associated systems and methods which at least partially overcome the problems discussed above. Particular embodiments of the new power management devices include two input ports configured to be electrically coupled to an energy source and a capacitor, respectively, and the capacitor is used to buffer the energy source from large peak loads, thereby mitigating energy source voltage drop and potential energy source damage caused by large peak loads. The energy source includes, for example, a battery. Additionally, certain embodiments of the new power management devices include multiple output ports enabling the power management devices to power multiple loads. Furthermore, some embodiments are capable of quickly transferring charge from capacitance of a load to a capacitor for later use, thereby enabling quick change in magnitude of load voltage while conserving energy. Moreover, some embodiments of the new power management devices use a single DC-to-DC converter, such as a single buck-boost converter, for all energy transfer needs, thereby promoting small size, low cost, and high efficiency of the power management devices.

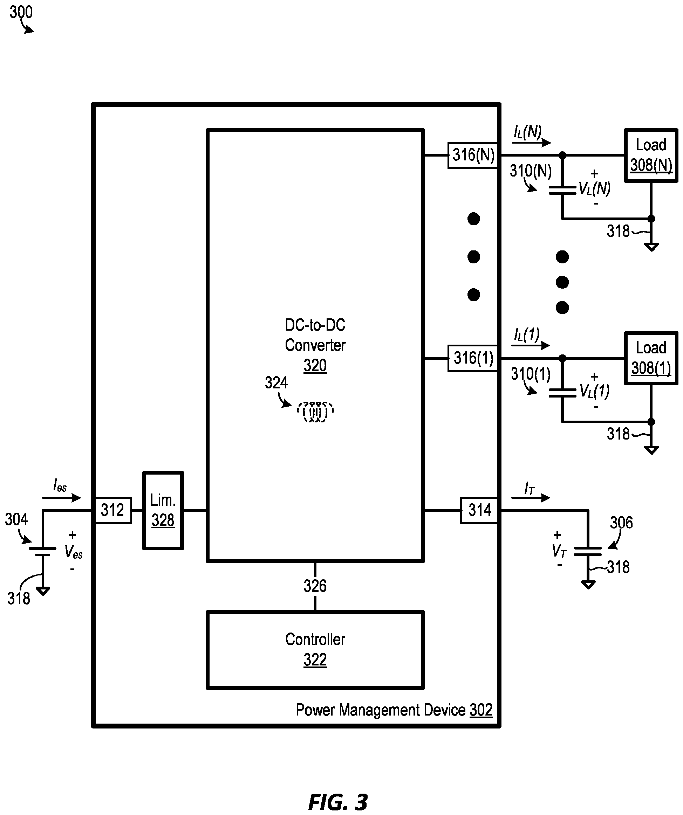

FIG. 3 is a block diagram of an electrical system 300 including a power management device 302, an energy source 304, a capacitor 306, N loads 308, and N capacitors 310, where N is an integer greater than or equal to one. In this document, specific instances of an item may be referred to by use of a numeral in parentheses (e.g. load 308(1)) while numerals without parentheses refer to any such item (e.g. loads 308). While FIG. 3 depicts N being greater than one, it is understood that N could be equal to one. Power management device 302, which is one embodiment of the new power management devices disclosed herein, includes a first input port 312, a second input port 314, and N output ports 316. First input port 312 is configured to be electrically coupled to energy source 304, and second input port 314 is configured to be electrically coupled to capacitor 306. Accordingly, energy source 304 is electrically coupled between first input port 312 and a reference node 318, and capacitor 306 is electrically coupled between second input port 314 and reference node 318. Reference node 318 is depicted as being a ground node, such as an earth ground node or a chassis ground node. It is understood, though, that reference node 318 need not be a ground node, and reference node 318 accordingly could be at a different electrical potential than an earth ground or a chassis ground. In some embodiments, first input port 312, second input port 314, and output ports 316 are discrete elements, such as integrated circuit pins, integrated circuit solder balls or solder tabs, electrical terminals, etc. In some other embodiments, first input port 312, second input port 314, and output ports 316 are respective electrical nodes that optionally encompass a plurality of electrical conductors.

Energy source 304 is, for example, a battery, such as a micro-battery. In certain embodiments, energy source 304 is a silver oxide battery, a lithium thionyl chloride battery, a lithium manganese dioxide battery, or a zinc air battery. For example, energy source 304 may include one or more coin cell batteries or button cell batteries. However, energy source 304 is not limited to being a battery. For example, energy source 304 could instead be a photovoltaic device, a thermoelectric generator (TEG), a microgenerator, a super capacitor, etc. In certain embodiments, energy source 304 has a maximum current capability that is smaller than a maximum peak current requirement of one or more loads 308. Energy source 304 could be replaced with a plurality of energy sources electrically coupled in series and/or in parallel, such as to achieve higher energy source capacity than can be practically achieved using a single energy source and/or to achieve a higher energy source voltage than can be practically achieved by using a single energy source. In embodiments including a plurality of energy sources, each energy source need not have the same configuration. Additionally, capacitor 306 could be replaced with a plurality of capacitors electrically coupled in series and/or in parallel, such as to achieve a higher capacitor voltage rating and/or a larger capacitance value than can be practically achieved using a single capacitor. One or more capacitors (not shown) are optionally electrically coupled in parallel with energy source 304.

Each output port 316 is configured to be electrically coupled to a respective load 308. Accordingly, each load 308 is electrically coupled between a respective output port 316 and reference node 318. Additionally, each capacitor 310 is electrically coupled between a respective output port 316 and reference node 318, such that each capacitor 310 is electrically coupled to a respective load 308. Examples of load 308 include, but are not limited to, loads of a mobile electronic device, such as a wearable wellness device, a wearable medical device, an IoT device, a mobile information technology device, a mobile communication device, etc. Each load 308 need not have the same configuration.

Power management device 302 further includes a direct-current-to-direct-current (DC-to-DC) converter 320 and a controller 322. DC-to-DC converter 320 is electrically coupled to first input port 312, second input port 314, and each output port 316. Particular embodiments of DC-to-DC converter 320 include a single inductor 324, symbolically shown by an inductor symbol in FIG. 3, used for transfer of energy between ports 312, 314, and 316, as discussed below. In certain embodiments, DC-to-DC converter 320 includes one or more of a buck-boost converter, a buck and boost converter, a buck converter, and a boost converter. While DC-to-DC converter 320 is depicted as being a single element, DC-to-DC converter 320 could be embodied by multiple sub-elements that need not be co-packaged. For example, in particular embodiments, inductor 324 is packaged separately from other elements of DC-to-DC converter 320.

Controller 322 is communicatively coupled 326 to DC-to-DC converter 320, and controller 322 at least partially controls operation of DC-to-DC converter 320. Controller 322 is formed, for example, of analog electronic circuitry and/or digital electronic circuitry. While controller 322 is pictured as being a discrete element, controller 322 could alternately be partially or fully combined with one more other elements. For example, in some alternate embodiments, controller 322 is at least partially combined with DC-to-DC converter 320. Additionally, controller 322 could be embodied by multiple sub-elements that need not be co-packaged. Additionally, controller 322 could alternately be partially or fully external to power management device 302.

Controller 322 is optionally further communicatively coupled to one or more of first input port 312, second input port 314, and output ports 316, such as obtain voltage and/or current measurements at one or more of the forementioned ports. For example, in certain embodiments, controller 322 is configured to obtain one or more of (a) voltage at first input port 312, e.g., a voltage $V_{es}$ across energy source 304, (b) current flowing through first input port 312, e.g., a current $I_{es}$ flowing between energy source 304 and first input port 312, (c) voltage at first output port 314, e.g., a voltage $V_T$ across capacitor 306, (d) current flowing through second input port 314, e.g., current flowing $I_T$ flowing between second input port 314 and capacitor 306, (e) voltage at each output port 316, e.g., a respective voltage $V_L$ across each load 308, (f) current at each output port 316, e.g., a respective current $I_L$ flowing between each output port 316 and the parallel combination of a respective load 308 and capacitor 310. Optional communication connections between controller 322 and one or more of first input port 312, second input port 314, and output ports 316 are not shown in FIG. 3 for illustrative clarity.

Power management device 302 optionally further includes current limiting circuitry 328 configured to limit magnitude of current $I_{es}$ flowing between energy source 304 and first input port 312 to a predetermined maximum value. Optional current limiting circuitry 328, when present, is electrically coupled between first input port 312 and DC-to-DC converter 320, such that first input port 312 is electrically couped to DC-to-DC converter 320 via current limiting circuitry 328. In some other embodiments, DC-to-DC converter 320 is configured to limit magnitude of current $I_{es}$ to the predetermined maximum value without use of current limiting circuitry 328, and current limiting circuitry 328 is accordingly omitted.

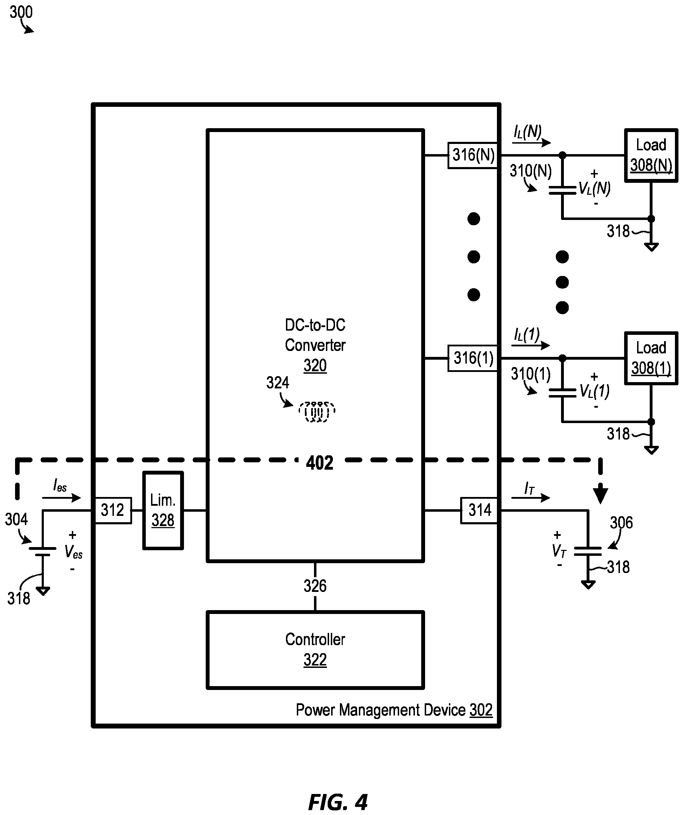

Controller 322 is configured to cause DC-to-DC converter 320 to operate in one several possible energy transfer modes, such as according to needs electrical system 300. Discussed below with respect to FIGS. 4-8 are several example energy transfer modes of DC-to-DC converter 320 in power management device 302. It is understood, though, that DC-to-DC converter 320 need not be capable of supporting all of the example energy transfer modes. Additionally, DC-to-DC converter 320 could be configured to support alternative and/or additional energy transfer modes without departing from the scope hereof.

FIG. 4 is a block diagram of electrical system 300 illustrating an example of controller 322 causing DC-to-DC converter 320 to operate in an input energy transfer mode 402, with an energy transfer path symbolically shown in FIG. 4 by heavy dashed lines, where DC-to-DC converter 320 transfers energy from first input port 312 to second input port 314. Consequently, capacitor 306 is charged from energy of energy source 304 in input energy transfer mode 402 of DC-to-DC converter 320. In particular embodiments, controller 322 controls DC-to-DC converter 320 such that capacitor 306 is charged to a voltage $V_T$ that has a larger magnitude than energy source voltage $V_{es}$, to promote large energy storage in capacitor 306 without requiring a large capacitance value of capacitor 306. In particular, energy $E$ stored in capacitor 306 is governed by EQN. 2 to below where $C_T$ is capacitance of capacitor 306. As evident from EQN. 2, increasing magnitude of voltage $V_T$ exponentially increases energy stored in capacitor 306 at a given capacitance value of capacitor 306.

$$E = \frac{1}{2} \cdot C_T \cdot V_T^2 \quad \text{EQN. 2}$$

Magnitude of current $I_{es}$ is limited, for example, by current limiting circuitry 328 and/or by operation of DC-to-DC converter 320 in input energy transfer mode 402 of DC-to-DC converter 320. Therefore, in particular embodiments, energy source 304 is not subject to large peak currents, which promotes a stable value of energy source voltage $V_{es}$ and long life of energy source 304.

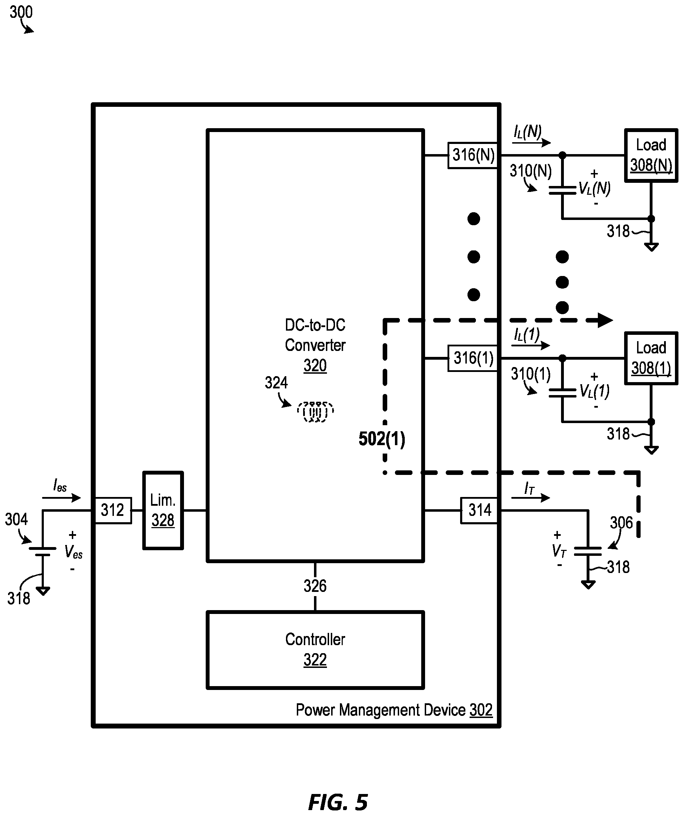

FIG. 5 is a block diagram of electrical system 300 illustrating an example of controller 322 causing DC-to-DC converter 320 to operate in a output energy transfer mode 502(1), with an energy transfer path symbolically shown in FIG. 5 by heavy dashed lines, where DC-to-DC converter 320 transfers energy from second input port 314 to output port 316(1). Consequently, DC-to-DC converter 320 provides electric power to load 308(1) from energy stored in capacitor 306, in output energy transfer mode 502(1) of DC-to-DC converter 320. It should be appreciated that load 308(1) is indirectly powered by energy source 304. In particular, capacitor 306 is charged from energy of energy source 304 in first energy transfer mode 402 of DC-to-DC converter 320, as discussed above, and load 308(1) is subsequently electrically powered from energy stored in capacitor 306 in output energy transfer mode 502(1) of DC-to-DC converter 320. Accordingly, capacitor 306 electrically buffers energy source 304 from loads 308, thereby preventing energy source 304 from being subject to large peak currents drawn by loads 308.

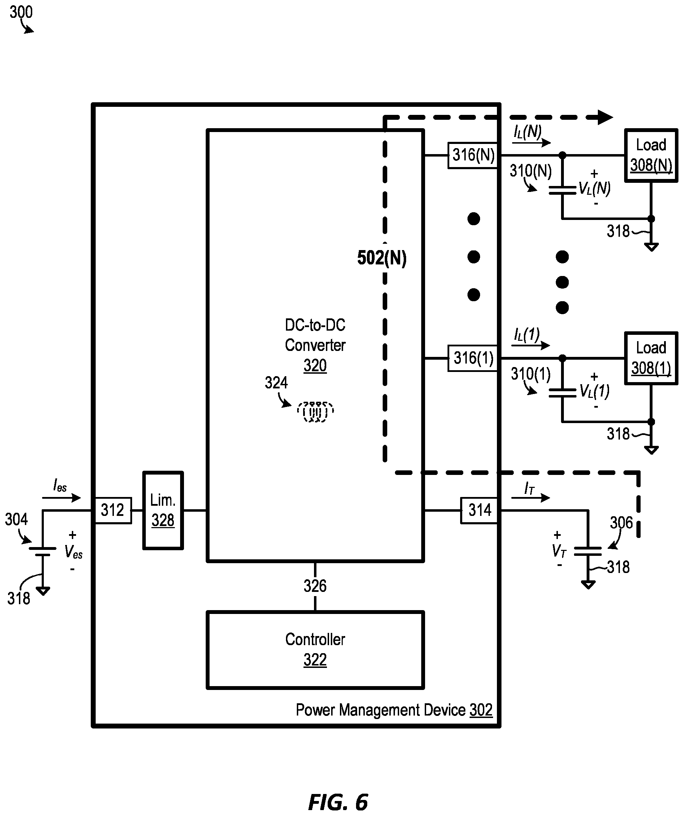

DC-to-DC converter 320 is configured support a respective output energy transfer mode 502 for each output port 316 of power management device 302, where DC-to-DC converter 320 transfers energy from second input port 314 to a respective output port 316 of the output energy transfer mode 502. For example, FIG. 6 is a block diagram of electrical system 300 illustrating an example of controller 322 causing DC-to-DC converter 320 to operate in an output energy transfer mode 502(N), with an energy transfer path symbolically shown in FIG. 6 by heavy dashed lines, where DC-to-DC converter 320 transfers energy from second input port 314 to output port 316(N). Consequently, DC-to-DC converter 320 provides electric power to load 308(N) from energy stored in capacitor 306, when DC-to-DC converter 320 operates in output energy transfer mode 502(N).

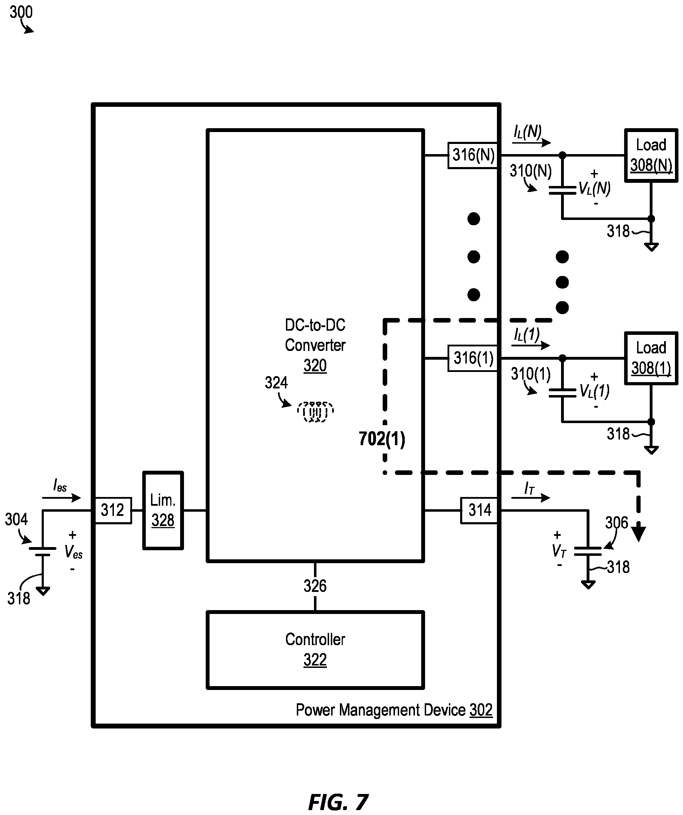

FIG. 7 is a block diagram of an electrical system 300 illustrating an example of controller 322 causing DC-to-DC converter 320 to operate in a discharge energy transfer mode 702(1), with an energy transfer path symbolically shown in FIG. 7 by heavy dashed lines, where DC-to-DC converter 320 transfers energy from output port 316(1) to second input port 314. Consequently, DC-to-DC converter 320 transfer energy stored in capacitor 310(1) to capacitor 306, thereby at least partially discharging capacitor 310(1) when DC-to-DC converter 320 operates in discharge energy transfer mode 702(1). It may be desirable to discharge capacitor 310(1), for example, if voltage $V_{L(1)}$ needs to be quickly decreased, such as during dynamic voltage scaling (DVS). It should be appreciated that transferring energy from capacitor 310(1) to capacitor 306 enables the energy to be subsequently used for electrically powering one or more loads 308, thereby promoting energy efficiency of electrical system 300. In certain embodiments, energy source 304 does not tolerate being back-powered or charged, i.e., energy source 304 does not tolerate current $I_{es}$ having a negative polarity. In such embodiments, energy from a capacitor 310 cannot be returned to energy source 304, which makes storing energy obtained from discharging a capacitor 310 into capacitor 306 especially beneficial, as the energy would otherwise need to be dissipated.

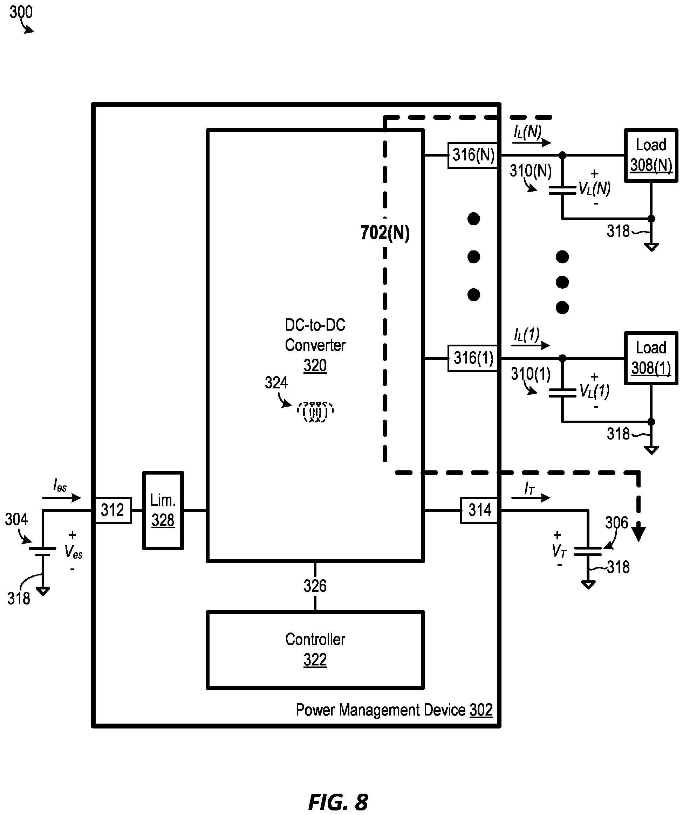

DC-to-DC converter 320 is configured support a respective discharge energy mode 702 for each output port 316 of power management device 302, where energy is transferred from the output port 316 to second input port 314. For example, FIG. 8 is a block diagram of electrical system 300 illustrating an example of controller 322 causing DC-to-DC converter 320 to operate in a discharge energy transfer mode 702(N), with an energy transfer path symbolically shown in FIG. 8 by heavy dashed lines, where DC-to-DC converter 320 transfers energy from output port 316(N) to capacitor 306. Consequently, DC-to-DC converter 320 transfers energy stored in capacitor 310(N) to capacitor 306, thereby at least partially discharging capacitor 310(N) when DC-to-DC converter 320 operates in discharge energy transfer mode 702(N).

It should be appreciated that the energy transfer mode discussed above with respect to FIGS. 4-8 use of a single power converter, i.e., DC-to-DC converter 320, to transfer energy between ports. Additionally, each of the above discussed energy transfer modes uses a common inductor, i.e., inductor 324 of DC-to-DC converter 320, to transfer energy between ports. For example, energy is transferred from first input port 312 to second input port 314 using inductor 324 of DC-to-DC converter 320 in input energy transfer mode 402, energy is transferred from second input port 314 to an output port 316 using inductor 324 of DC-to-DC converter 320 in an output energy transfer mode 502, and energy is transferred from an output port 316 to second input port 314 using inductor 324 of DC-to-DC converter 320 in a discharge energy transfer mode 702. Such use of a single power converter for the aforementioned energy transfer modes promotes efficiency by eliminating power losses associated with use of multiple power converters to transfer energy between ports. Additionally, the ability of power management device 302 to transfer energy between ports using a single power converter, i.e., DC-to-DC converter 320, promotes small size and low cost of power management device 302.

Controller 322 is configured to cause DC-to-DC converter 320 to operate in one of input energy transfer mode 402, an output energy transfer mode 502, and a discharge energy transfer mode 702, for example, based one or more parameters of electrical system 300. In certain embodiments, controller 322 is configured to (a) cause DC-to-DC converter 320 to operate in input energy transfer mode 402 in response to voltage $V_T$ dropping below a predetermined minimum voltage value and (b) cause DC-to-DC converter 320 to discontinue operating in input energy transfer mode 402 in response to either (1) voltage $V_T$ rising above a predetermined maximum voltage value or (2) expiration of a maximum permissible time period for operating in input energy transfer mode 402. Additionally, in particular embodiments, controller 322 is configured to (a) cause DC-to-DC converter 320 to operate in an output power transfer mode 502 in response to a load voltage $V_L$ associated with the output power transfer mode 502 dropping below a predetermined load threshold voltage value and (b) cause DC-to-DC converter 320 to discontinue operating in the output power transfer mode 502 in response to either (1) the load voltage $V_L$ rising above a predetermined maximum load voltage value or (2) expiration of a maximum permissible time period for operating in the output power transfer mode 502. Furthermore, in some embodiments, controller 322 is configured to (a) cause DC-to-DC converter 320 to operate in an output power transfer mode 502 in response to an increase in load current $I_L$ associated with the output power transfer mode 502 and (b) cause DC-to-DC converter 320 to discontinue operating in the output power transfer mode 502 in response to a decrease in load current $I_L$. Furthermore, in certain embodiments, controller 322 causes DC-to-DC converter 320 to operate in a discharge energy transfer mode 702 in response to a signal indicating a decrease in a desired voltage at an output port 316 corresponding to the discharge energy transfer mode 702.

Some embodiments of controller 322 are configured to cause DC-to-DC converter 320 to quickly switch between energy transfer modes. For example, particular embodiments of controller 322 are configured to cause DC-to-DC converter 320 to repeatedly switch between input energy transfer mode 402 and one or more output energy transfer modes 502, such as to simultaneously regulate both voltage $V_T$ and one or more load voltages $V_L$ under light load conditions of electrical system 300. Additionally, certain embodiments of controller 322 are configured to give an output energy transfer mode 502 priority over input energy transfer mode 402 to promote accurate regulation of load voltage $V_L$ and/or load current $I_L$. Moreover, some embodiments of controller 322 are configured to cause DC-to-DC converter 320 to simultaneously operate in two or more output energy transfer modes 502, i.e., to simultaneously transfer energy from second input port 314 to two or more output ports 316, such as if the two or more output ports 316 are operating at a common voltage $V_L$. Furthermore, particular embodiments of controller 322 are configured to cause DC-to-DC converter 320 to simultaneously operate in two or more discharge energy transfer modes 702, i.e., to simultaneously transfer energy from two or more output ports 316 to second input port 314, such as if the two or more output ports 316 are operating at a common voltage $V_L$.

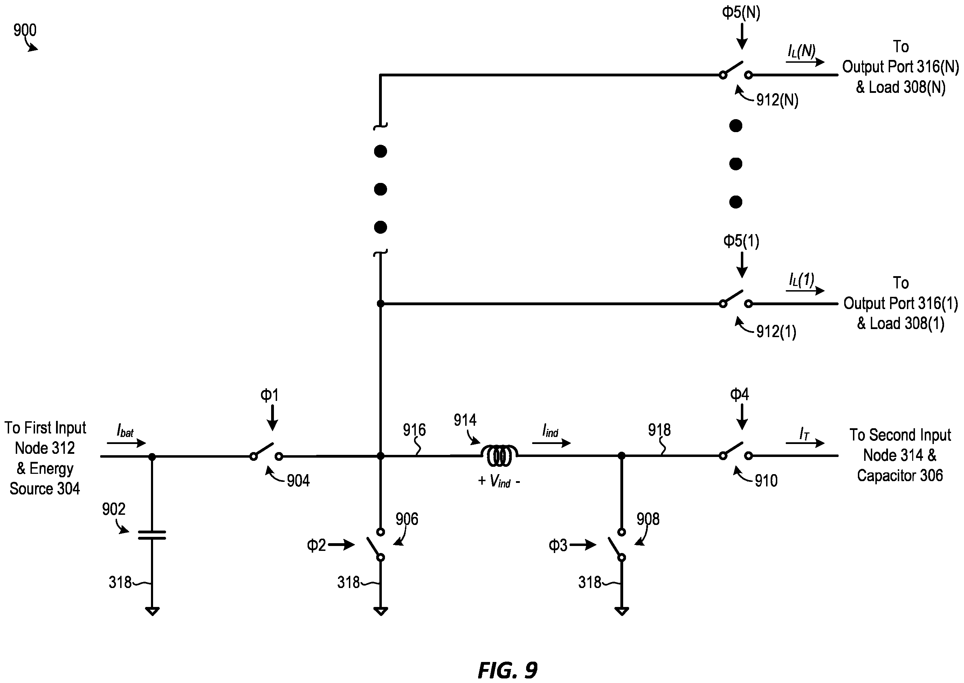

FIG. 9 is a schematic diagram of a buck-boost converter 900, which is one possible embodiment of DC-to-DC converter 320 (FIG. 3) in embodiments where DC-to-DC converter 320 is a buck-boost converter. It is understood, though, that DC-to-DC converter 320 could be embodied in other manners without departing from the scope hereof.

Buck-boost converter 900 includes an input capacitor 902, a switching device 904, a switching device 906, a switching device 908, a switching device 910, N switching devices 912, and an inductor 914. Inductor 914 is an embodiment of inductor 324 (FIG. 3) Switching devices 904, 906, 908, 912 and 912 are controlled by respective control signals Φ1, Φ2, Φ3, Φ4, and Φ5, generated by controller 322 (not shown in FIG. 9). In certain embodiments, each switching device 904, 906, 908, 912 and 912 includes one or more transistors, and each switching device 904, 906, 908, 912 and 912 optionally further includes driving circuitry for driving the one or more transistors.

Input capacitor 902 is electrically coupled between first input port 312 and reference node 318, and switching device 904 is electrically coupled between first input port 312 and a first switching node 916. Switching device 906 is electrically coupled between first switching node 916 and reference node 318, and inductor 914 is electrically coupled between first switching node 916 and a second switching node 918. Switching device 908 is electrically coupled between second switching node 918 and reference node 318, and switching device 910 is electrically coupled between second switching node 918 and second input port 314. Each switching device 912 is electrically coupled between first switching node 916 and a respective output port 316.

Controller 322 is configured to generate control signals Φ1, Φ2, Φ3, Φ4, and Φ5, to control operation of buck-boost converter 900, such as cause buck-boost converter 900 to operate in one of input energy transfer mode 402, one or more output energy transfer modes 502, and one or more discharge energy transfer modes 702. In some embodiments, controller 322 uses a voltage-mode control technique or a current-mode control technique to regulate one or more parameters of electrical system 300. Examples of possible parameters that may regulated by controller 322 include, for example, one or more of voltage $V_T$, current $I_T$, voltage $V_L$, and current $I_L$. Controller 322 may regulate voltage $V_T$ and/or current $I_T$, in input energy transfer mode 402. Additionally, controller 322 may regulate each voltage $V_L$ and/or current $I_L$ in a respective output energy transfer mode 502. For example, controller 322 may regulate voltage $V_L(1)$ in output energy transfer mode 502(1), and controller 322 may regulate voltage $V_L(N)$ in output energy transfer mode 502(N). Furthermore, controller 322 may regulate each voltage $V_L$ and/or current $I_L$ in a respective discharge energy transfer mode 702. For example, controller 322 may regulate voltage $V_L(1)$ in discharge energy transfer mode 702(1), and controller 322 may regulate voltage $V_L(N)$ in discharge energy transfer mode 702(N).

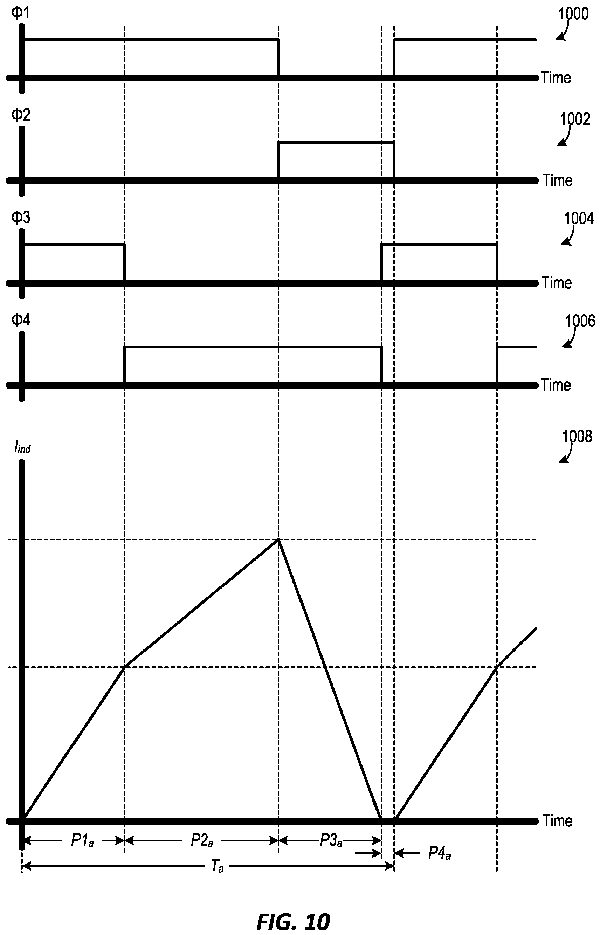

Each switching device 904-912 of buck-boost converter 900 is not necessarily used in each energy transfer mode. For example, in certain embodiments, switching devices 912 remain in their off-states in input energy transfer mode 402. As another example, in some embodiments, switching device 904 remains in its off-state in any output energy transfer mode 502 as well as in any discharge energy transfer mode 702. Discussed below with respect to FIGS. 10-17 are several examples of how controller 322 may generate control signals Φ1, Φ2, Φ3, Φ4, and Φ5, to control operation of buck-boost converter 900. It is understood, though, that buck-boost converter 900 is not limited in operating according to examples of FIGS. 10-17.

Each of FIGS. 10-17 assumes that (a) a control signal is asserted when in a logic high state, (b) a switching device operates in its on-state (conductive state) when its respective control signal is asserted, and (c) a switching device operates in its off-state (non-conductive-state) when its respective control signal is de-asserted. For instance, in the example of FIGS. 10-17 control signal Φ2 is asserted when in a logic high state, switching device 906 operates in its on-state when control signal Φ2 is asserted, and switching device 906 operates in its off-state when control signal Φ2 is de-asserted. However, the control signals may have other polarities, and the switching devices may respond to the control signals in other manners, without departing from the scope hereof.

FIG. 10 includes graphs 1000, 1002, 1004, 1006, and 1008 illustrating one example of controller 322 generating control signals Φ1, Φ2, Φ3, and Φ4 to cause buck-boost converter 900 to operate in input energy transfer mode 402. Switching devices 912 remain in their off-states in input energy transfer mode 402, and control signals Φ5 are therefore not shown in FIG. 10. Graph 1000 illustrates control signal Φ1 versus time, graph 1002 illustrates control signal Φ2 versus time, graph 1004 illustrates control signal Φ3 versus time, graph 1006 illustrates control signal Φ4 versus time, and graph 1008 illustrates inductor current $I_{ind}$ versus time. Graphs 1000-1008 have a common time base. Controller 322 has a period $T_a$, and each period $T_a$ is broken up into four phases $P1_a$, $P2_a$, $P3_a$, and $P4_a$, in the FIG. 10 example. Controller 322 determines relative durations of the phases of period $T_a$, for example, to regulate one or more parameters of electrical system 300. In phase $P1_a$, switching devices 904 and 908 are in their on-states, and switching devices 906 and 910 are in their off-states. Consequently, a voltage $V_{ind}$ across inductor 914 is equal to $V_{es}$, inductor current $I_{ind}$ ramps upward, and inductor 914 is charged with energy from energy source 304. In phase $P2_a$, switching devices 904 and 910 are in their on-states, and switching devices 906 and 908 are in their off-states. Consequently, voltage $V_{ind}$ across inductor 914 is equal to $V_{bat} - V_T$. Voltage $V_{es}$ is greater than voltage $V_T$ in the FIG. 10 example, and current $I_{ind}$ therefore continues to ramp upward in phase $P2_a$, albeit at a slower rate than in phase $P1_a$. Inductor 914 continues to be charged with energy from energy source 304, as well as deliver energy to capacitor 306, in phase $P2_a$. In phase $P3_a$, switching devices 906 and 910 are in their on-states, and switching devices 904 and 908 are in their off-states. Consequently, voltage $V_{ind}$ across inductor 914 is equal to $-V_T$, and inductor current $I_{ind}$ ramps downward, e.g., to zero, such as illustrated in FIG. 10. Inductor 914 continues to deliver energy to capacitor 306, but inductor 914 is not charged from energy source 304, in phase $P3_a$. In phase $P4_a$, switching devices 906 and 908 are in their on-states, and switching devices 904 and 910 are in their off-states, such that inductor 914 is short-circuited. The purpose of phase $P4_a$ is, for example, to provide time for controller 322 to obtain and/or process data.

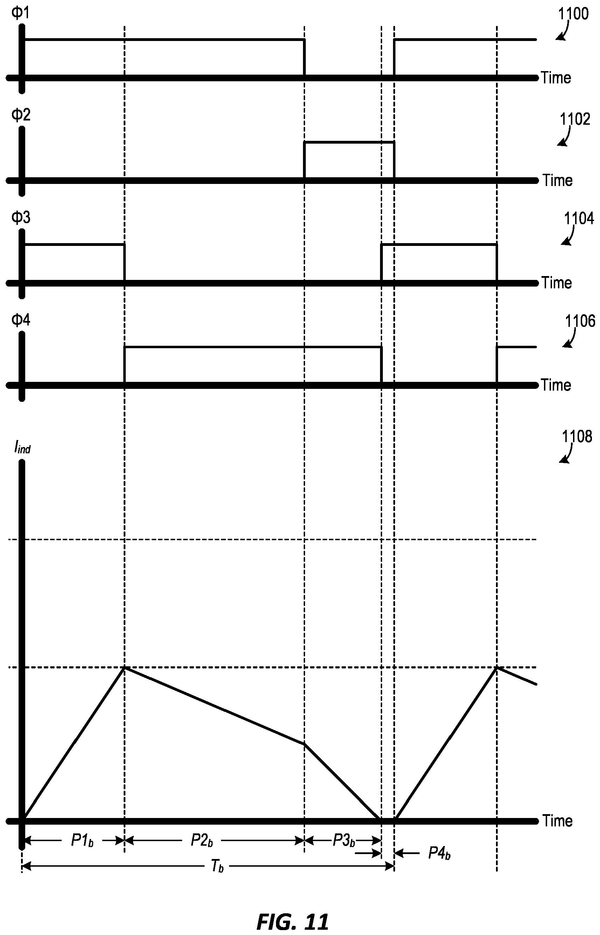

FIG. 11 illustrates another example of controller 322 generating control signals Φ1, Φ2, Φ3, and Φ4 to cause buck-boost converter 900 to operate in input energy transfer mode 402. FIG. 11 includes graphs 1100, 1102, 1104, 1106, and 1108 which are analogous to graphs 1000, 1002, 1004, 1006, and 1008 of FIG. 10, respectively. Controller 322 has a period $T_b$, and each period $T_b$ is broken up into four phases $P1_b$, $P2_b$, $P3_b$, and $P4_b$, in the FIG. 11 example. Controller 322 determines relative durations of the phases of period $T_b$, for example, to regulate one or more parameters of electrical system 300. In phase $P1_b$, switching devices 904 and 908 are in their on-states, and switching devices 906 and 910 are in their off-states. Consequently, voltage $V_{ind}$ across inductor 914 is equal to $V_{es}$, and inductor 914 is charged with energy from energy source 304. In phase $P2_b$, switching devices 904 and 910 are in their on-states, and switching devices 906 and 908 are in their off-states. Consequently, voltage $V_{ind}$ across inductor 914 is equal to $V_{es}$ - $V_T$. However, in contrast to the example of FIG. 10, voltage $V_{es}$ is less than voltage $V_T$ in the FIG. 11 example, and current $I_{ind}$ therefore ramps downward in phase $P2_b$. Inductor 914 delivers energy to capacitor 306 in phase $P2_b$. In phase $P3_b$, switching devices 906 and 910 are in their on-states, and switching devices 904 and 908 are in their off-states. Consequently, voltage $V_{ind}$ across inductor 914 is equal to -$V_T$, and inductor 914 continues to deliver energy to capacitor 306. In phase $P4_a$, switching devices 906 and 908 are in their on-states, and switching devices 904 and 910 are in their off-states, such that inductor 914 is short-circuited. The purpose of phase $P4_b$ is, for example, to provide time for controller 322 to obtain and/or process data

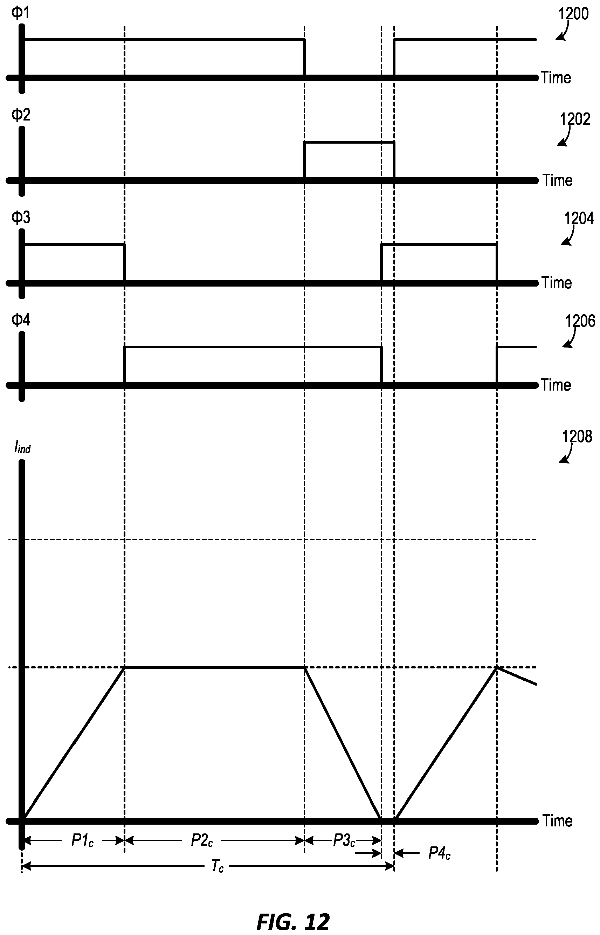

FIG. 12 illustrates an additional example of controller 322 generating control signals Φ1, Φ2, Φ3, and Φ4 to cause buck-boost converter 900 to operate in input energy transfer mode 402. FIG. 12 includes graphs 1200, 1202, 1204, 1206, and 1208 which are analogous to graphs 1000, 1002, 1004, 1006, and 1008 of FIG. 10, respectively. Controller 322 has a period $T_c$, and each period $T_c$ is broken up into four phases $P1_c$, $P2_c$, $P3_c$, and $P4_c$, in the FIG. 12 example. Controller 322 determines relative durations of the phases of period $T_c$, for example, to regulate one or more parameters of electrical system 300. In phase $P1_c$, switching devices 904 and 908 are in their on-states, and switching devices 906 and 910 are in their off-states. Consequently, voltage $V_{ind}$ across inductor 914 is equal to $V_{es}$, and inductor 914 is charged with energy from energy source 304. In phase $P2_c$, switching devices 904 and 910 are in their on-states, and switching devices 906 and 908 are in their off-states. Consequently, voltage $V_{ind}$ across inductor 914 is equal to $V_{bat}$ - $V_T$. However, in contrast to the examples of FIG. 10 and 11, voltage $V_{es}$ is equal to voltage $V_T$ in the FIG. 11 example, and current $I_{ind}$ is therefore flat in phase $P2_c$. Inductor 914 delivers energy to capacitor 306 in phase $P2_c$. In phase $P3_c$, switching devices 906 and 910 are in their on-states, and switching devices 904 and 908 are in their off-states. Consequently, voltage $V_{ind}$ across inductor 914 is equal to -$V_T$, and inductor 914 continues to deliver energy to capacitor 306. In phase $P4_c$, switching devices 906 and 908 are in their on-states, and switching devices 904 and 910 are in their off-states, such that inductor 914 is short-circuited. The purpose of phase $P4_c$ is, for example, to provide time for controller 322 to obtain and/or process data.

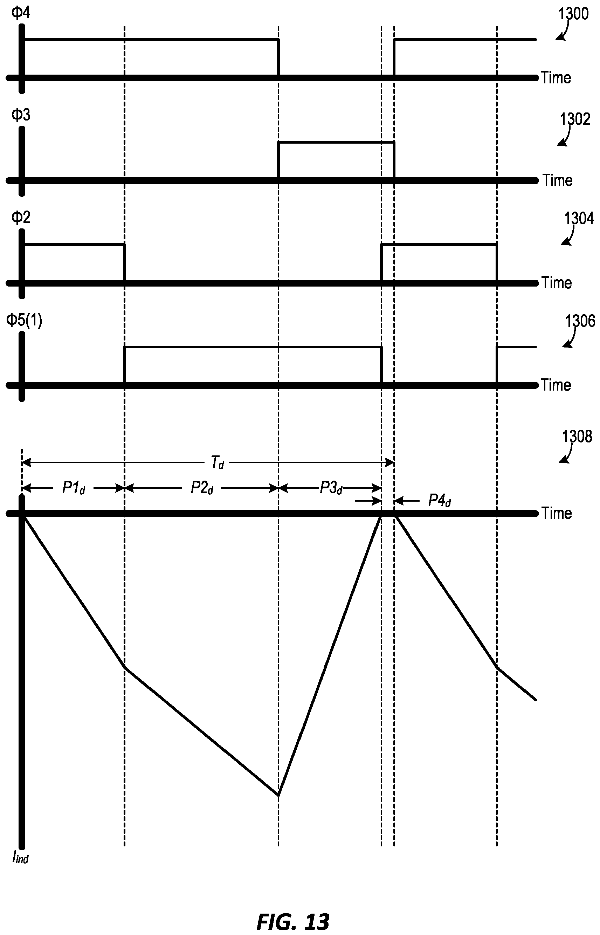

FIG. 13 includes graphs 1300, 1302, 1304, 1306, and 1308 illustrating one example of controller 322 generating controls signals Φ4, Φ3, Φ2, and Φ5(1) to cause buck-boost converter 900 to operate in output energy transfer mode 502(1) where buck-boost converter 900 transfers energy from second input port 314 to output port 316(1). Switching device 904 remains in its off-state in output energy transfer mode 502(1), and control signal Φ1 is therefore not shown in FIG. 13. Additionally, in embodiments where N is greater than one, all switching devices 912 except for switching device 912(1) also remain in their off-states in output energy transfer mode 502(1). Therefore, no control signals Φ5 other than control signal Φ5(1) are shown in FIG. 13.

Graph 1300 illustrates control signal Φ4 versus time, graph 1302 illustrates control signal Φ3 versus time, graph 1304 illustrates control signal Φ2 versus time, graph 1306 illustrates control signal Φ5(1) versus time, and graph 1308 illustrates inductor current $I_{ind}$ versus time. Graphs 1300-1308 have a common time base. Controller 322 has a switching period $T_d$, and each period $T_d$ is broken up into four phases $Ph$, $P2_d$, $P3_d$, and $P4_d$, in the FIG. 13 example. Controller 322 determines relative durations of the phases of period $T_d$, for example, to regulate one or more parameters of electrical system 300. It should be noted that inductor current $I_{ind}$ is negative in the FIG. 13 example due to the direction of energy flow in output energy transfer mode 502(1), i.e., energy flows away from capacitor 306, instead of to capacitor 306, in output energy transfer mode 502(1).

In phase $P1_d$, switching devices 910 and 906 are in their on-states, and switching devices 908 and 912(1) are in their off-states. Consequently, a voltage $V_{ind}$ across inductor 914 is equal to -$V_T$, inductor current $I_{ind}$ ramps downward, and inductor 914 is charged with energy from capacitor 306. In phase $P2_d$, switching devices 910 and 912(1) are in their on-states, and switching devices 908 and 906 are in their off-states. Consequently, voltage $V_{ind}$ across inductor 914 is equal to $V_L(1)$ - $V_T$. Voltage $V_T$ is greater than voltage $V_L(1)$ in the FIG. 13 example, and current $I_{ind}$ therefore continues to ramp downward in phase $P2_d$, albeit at a slower rate than in phase $P1_d$. Inductor 914 continues to be charged with energy from capacitor 306, as well as deliver energy to output port 316(1), in phase $P2_d$. It is understood, though, that if voltage $V_L(1)$ were instead greater than voltage $V_T$, inductor current $I_{ind}$ would ramp upward, instead of ramping downward, in phase $P2_d$. Additionally, inductor current $I_{ind}$ would be flat in phase $P2_d$ if voltage $V_T$ were equal to voltage $V_L(1)$. In phase $P3_d$, switching devices 908 and 912(1) are in their on-states, and switching devices 910 and 906 are in their off-states. Consequently, voltage $V_{ind}$ across inductor 914 is equal to $V_L(1)$ and current $I_{ind}$ ramps upward to zero. Inductor 914 continues to deliver energy to output port 316(1), but inductor 914 is not charged from capacitor 306, in phase $P3_d$. In phase $P4_d$, switching devices 906 and 908 are in their on-states, and switching devices 910 and 912(1) are in their off-states, such that inductor 914 is short-circuited. The purpose of phase $P4_d$ is ensure that inductor 914 is, for example, to provide time for controller 322 to obtain and/or process data.

The example of FIG. 13 could be modified to cause buck-boost converter 900 to operate in another output energy transfer mode 502 by swapping control signal Φ5(1) for another control signal Φ5. For example, the FIG. 13 example could be modified to cause buck-boost converter 900 to operate in output energy transfer mode 502(N) by swapping control

signal $\Phi5(1)$ for control signal $\Phi5(N)$.

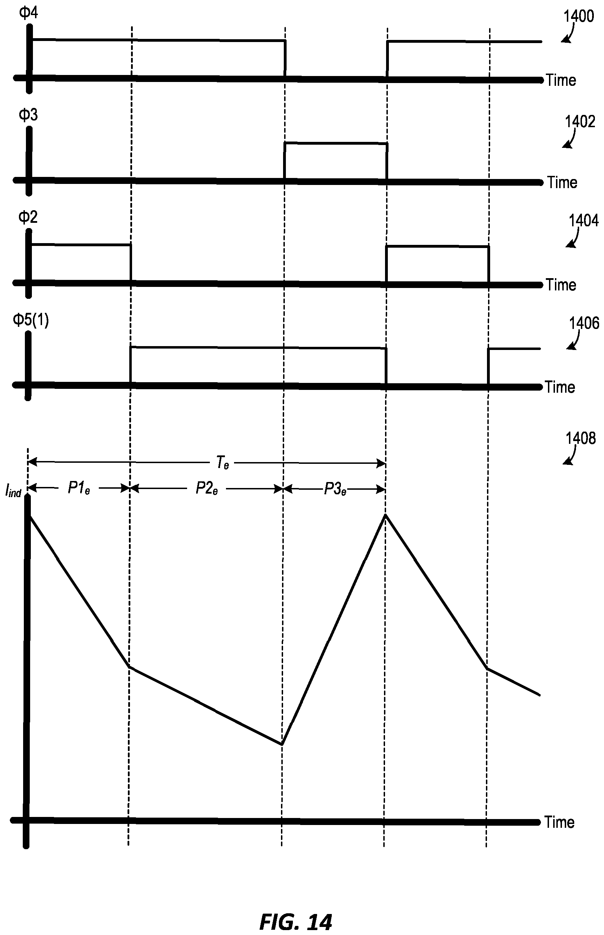

FIG. 14 includes graphs 1400, 1402, 1404, 1406, and 1408 illustrating an example of controller 322 generating control signals $\Phi4$, $\Phi3$, $\Phi2$, and $\Phi5(1)$ to cause buck-boost converter 900 to operate in discharge energy transfer mode 702(1) where buck-boost converter 900 transfers energy from output port 316(1) to second input port 314. Switching device 904 remains in its off-state in discharge energy transfer mode 702(1), and control signal $\Phi1$ is therefore not shown in FIG. 14. Additionally, in embodiments where N is greater than one, all switching devices 912 except for switching device 912(1) also remain in their off-states in discharge energy transfer mode 702(1). Therefore, no control signals $\Phi5$ other than control signal $\Phi5(1)$ are shown in FIG. 14.

Graph 1400 illustrates control signal $\Phi4$ versus time, graph 1402 illustrates control signal $\Phi3$ versus time, graph 1404 illustrates control signal $\Phi2$ versus time, graph 1406 illustrates control signal $\Phi5(1)$ versus time, and graph 1408 illustrates inductor current $I_{ind}$ versus time. Graphs 1400-1408 have a common time base. Controller 322 has a switching period $T_e$, and each period $T_e$ is broken up into three phases $P1_e$, $P2_e$, and $P3_e$, in the FIG. 14 example. The example of FIG. 14 does not include a phase where inductor current $I_{ind}$ remains at zero magnitude. Controller 322 determines relative durations of the phases of period $T_e$, for example, to regulate one or more parameters of electrical system 300.

In phase $P1_e$, switching devices 910 and 906 are in their on-states, and switching devices 908 and 912(1) are in their off-states. Consequently, a voltage $V_{ind}$ across inductor 914 is equal to $-V_T$, inductor current $I_{ind}$ ramps downward, and capacitor 306 is charged with energy from inductor 914. In phase $P2_e$, switching devices 910 and 912(1) are in their on-states, and switching devices 908 and 906 are in their off-states. Consequently, voltage $V_{ind}$ across inductor 914 is equal to $V_L(1) - V_T$. Voltage $V_T$ is greater than voltage $V_L(1)$ in the FIG. 14 example, and current $I_{ind}$ therefore continues to ramp downward in phase $P2_e$, albeit at a slower rate than in phase $P1_e$. Inductor 914 continues to deliver energy to capacitor 306, as well as receive energy from capacitor 310(1), in phase $P2_e$. In phase $P3_e$, switching devices 908 and 912(1) are in their on-states, and switching devices 910 and 906 are in their off-states. Consequently, voltage $V_{ind}$ across inductor 914 is equal to $V_L(1)$ and current $I_{ind}$ ramps upward, such that inductor 914 is charged with energy from capacitor 310(1).

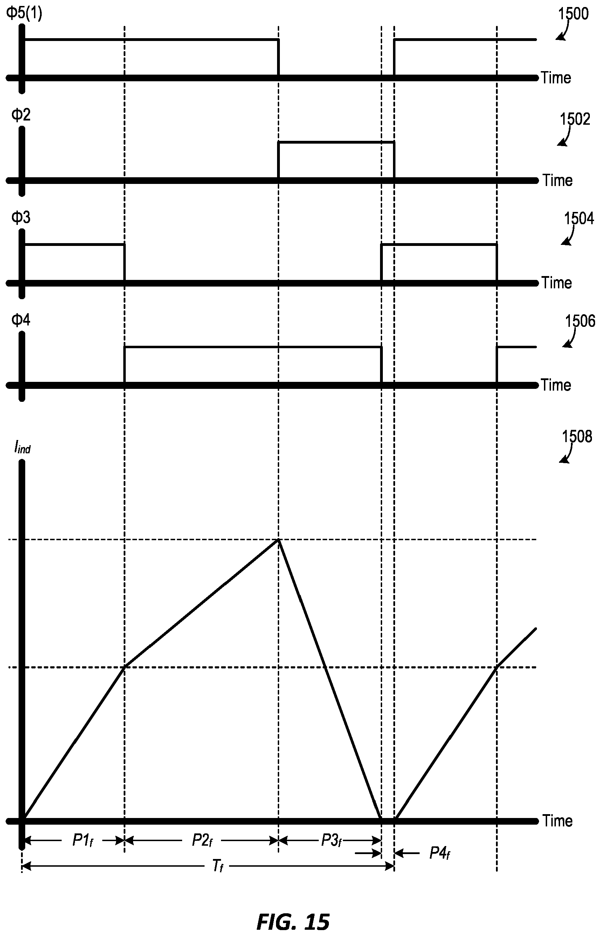

FIG. 15 includes graphs 1500, 1502, 1504, 1506, and 1508 illustrating another example of controller 322 generating controls signals $\Phi5(1)$, $\Phi2$, $\Phi3$, and $\Phi4$ to cause buck-boost converter 900 to operate in discharge energy transfer mode 702(1) where buck-boost converter 900 transfers energy from output port 316(1) to second input port 314. Switching device 904 remains in its off-state in output energy transfer mode 702(1), and control signal $\Phi1$ is therefore not shown in FIG. 15. Additionally, in embodiments where N is greater than one, all switching devices 912 except for switching device 912(1) also remain in their off-states in discharge energy transfer mode 702(1). Therefore, no control signals $\Phi5$ other than control signal $\Phi5(1)$ are shown in FIG. 15.

Graph 1500 illustrates control signal $\Phi5(1)$ versus time, graph 1502 illustrates control signal $\Phi2$ versus time, graph 1504 illustrates control signal $\Phi3$ versus time, graph 1506 illustrates control signal $\Phi4$ versus time, and graph 1508 illustrates inductor current $I_{ind}$ versus time. Graphs 1500-1508 have a common time base. Controller 322 has a period $T_f$, and each period $T_f$ is broken up into four phases $P1_f$, $P2_f$, $P3_f$, and $P4_f$, in the FIG. 15 example. Controller 322 determines relative durations of the phases of period $T_f$, for example, to regulate one or more parameters of electrical system 300. In phase $P1_f$, switching devices 912(1) and 908 are in their on-states, and switching devices 906 and 910 are in their off-states. Consequently, a voltage $V_{ind}$ across inductor 914 is equal to $V_L(1)$, inductor current $I_{ind}$ ramps upward, and inductor 914 is charged with energy from capacitor 310(1). In phase $P2_f$, switching devices 912(1) and 910 are in their on-states, and switching devices 906 and 908 are in their off-states. Consequently, voltage $V_{ind}$ across inductor 914 is equal to $V_L(1) - V_T$. Voltage $V_L(1)$ is greater than voltage $V_T$ in the FIG. 15 example, and current $I_{ind}$ therefore continues to ramp upward in phase $P2_f$, albeit at a slower rate than in phase $P1_f$. Inductor 914 continues to be charged with energy from capacitor 310(1), as well as deliver energy to capacitor 306, in phase $P2_f$. It is understood, though, that if voltage $V_L(1)$ were instead less than voltage $V_T$, inductor current $I_{ind}$ would ramp downward, instead of ramping upward, in phase $P2_f$. Additionally, inductor current $I_{ind}$ would be flat in phase $P2_f$ if voltage $V_T$ were equal to voltage $V_L(1)$. In phase $P3_f$, switching devices 906 and 910 are in their on-states, and switching devices 912(1) and 908 are in their off-states. Consequently, voltage $V_{ind}$ across inductor 914 is equal to $-V_T$. Inductor 914 continues to deliver energy to capacitor 306, but inductor 914 is not charged from load capacitor 310(1), in phase $P3_f$. In phase $P4_f$, switching devices 906 and 908 are in their on-states, and switching devices 912(1) and 910 are in their off-states, such that inductor 914 is short-circuited. The purpose of phase $P4_f$ is, for example, to provide time for controller 322 to obtain and/or process data.

The examples of FIGS. 14 and 15 could be modified to cause buck-boost converter 900 to operate in another discharge energy transfer mode 702 by swapping control signal $\Phi5(1)$ for another control signal $\Phi5$. For example, the FIG. 15 example could be modified to cause buck-boost converter 900 to operate in discharge energy transfer mode 702(N) by swapping control signal $\Phi5(1)$ for another control signal $\Phi5(N)$.

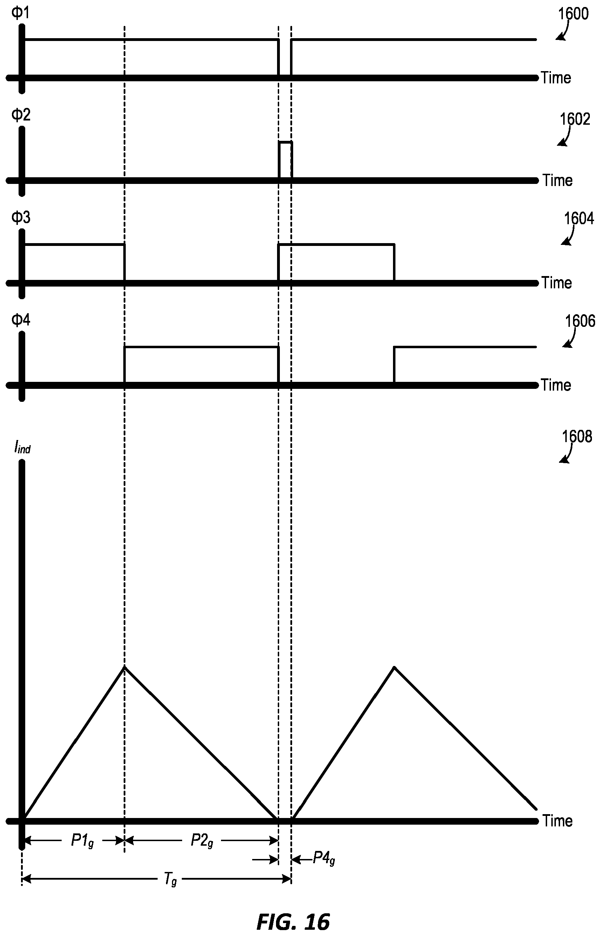

The examples of FIGS. 10-15 could be modified, such as to omit one or more phases per period, add one or more phases per period, change characteristics of inductor current $I_{ind}$ (e.g., cause inductor current $I_{ind}$ to be continuous, cause inductor current $I_{ind}$ to be discontinuous, cause inductor current $I_{ind}$ to change directions, etc.). For example, in some alternate embodiments of the examples of FIGS. 10-15, a third phase is omitted, such as in cases where a voltage at a port receiving is energy is greater than a voltage at a port providing energy. For instance, FIG. 16 illustrates an additional example of controller 322 generating control signals Φ1, Φ2, Φ3, and Φ4 to cause buck-boost converter 900 to operate in input energy transfer mode 402. The example of FIG. 16 is similar to the example of FIG. 11, but with a third phase omitted. FIG. 16 includes graphs 1600, 1602, 1604, 1606, and 1608 which are analogous to graphs 1000, 1002, 1004, 1006, and 1008 of FIG. 10, respectively.

Controller 322 has a period $T_g$, and each period $T_g$ is broken up into three phases $P1_g$, $P2_g$, and $P4_g$, in the FIG. 16 example. Controller 322 determines relative durations of the phases of period $T_g$, for example, to regulate one or more parameters of electrical system 300. In phase $P1_g$, switching devices 904 and 908 are in their on-states, and switching devices 906 and 910 are in their off-states. Consequently, voltage $V_{ind}$ across inductor 914 is equal to $V_{es}$, and inductor 914 is charged with energy from energy source 304. In phase $P2_g$, switching devices 904 and 910 are in their on-states, and switching devices 906 and 908 are in their off-states. Consequently, voltage $V_{ind}$ across inductor 914 is equal to $V_{es} - V_T$. Voltage $V_{es}$ is less than voltage $V_T$ in the FIG. 16 example, and current $I_{ind}$ therefore ramps downward in phase $P2_b$ to zero. Inductor 914 delivers energy to capacitor 306 in phase $P2_g$. There is no phase analogous to phase $P3_b$ (FIG. 11) in the FIG. 16 example, Instead, the example of FIG. 16 proceeds immediately from phase $P2_g$ to phase $P4_g$, where switching devices 906 and 908 are in their on-states, and switching devices 904 and 910 are in their off-states, such that inductor 914 is short-circuited. As such, phase $P4_g$ of FIG. 16 is analogous to phase $P4_b$ of FIG. 11.

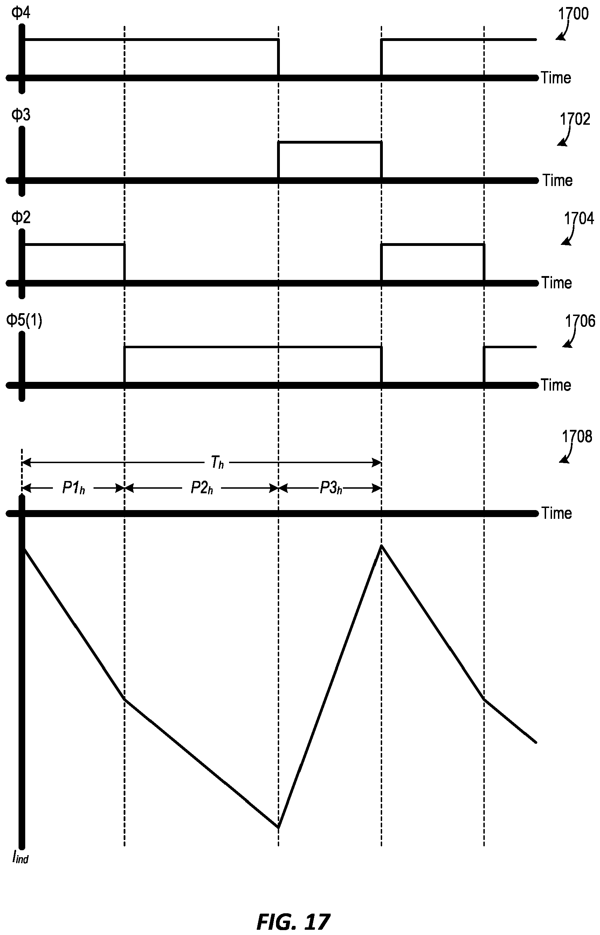

As another example of a possible modification to the aforementioned examples, a fourth phase where inductor 914 is short-circuited could be omitted, such as in cases where inductor current $I_{ind}$ is continuous. For example, FIG. 17 illustrates an alternate embodiment of the FIG. 13 example omitting a fourth phase. In particular, FIG. 17 includes graphs 1700, 1702, 1704, 1706, and 1708 illustrating another example of controller 322 generating controls signals Φ4, Φ3, Φ2, and Φ5(1) to cause buck-boost converter 900 to operate in output energy transfer mode 502(1) where buck-boost converter 900 transfers energy from second input port 314 to output port 316(1). Switching device 904 remains in its off-state in output energy transfer mode 502(1), and control signal Φ1 is therefore not shown in FIG. 17. Additionally, in embodiments where N is greater than one, all switching devices 912 except for switching device 912(1) also remain in their off-states in output energy transfer mode 502(1). Therefore, no control signals Φ5 other than control signal Φ5(1) are shown in FIG. 17.

Graph 1700 illustrates control signal Φ4 versus time, graph 1702 illustrates control signal Φ3 versus time, graph 1704 illustrates control signal Φ2 versus time, graph 1706 illustrates control signal Φ5(1) versus time, and graph 1708 illustrates inductor current $I_{ind}$ versus time. Graphs 1700-1708 have a common time base. Controller 322 has a switching period $T_h$, and each period $T_h$ is broken up into three phases $P1_h$, $P2_h$, and $P3_h$, in the FIG. 17 example. Controller 322 determines relative durations of the phases of period $T_h$, for example, to regulate one or more parameters of electrical system 300. It should be noted that inductor current $I_{ind}$ is continuous in the FIG. 17 example.

In phase $P1_h$, switching devices 910 and 906 are in their on-states, and switching devices 908 and 912(1) are in their off-states. Consequently, a voltage $V_{ind}$ across inductor 914 is equal to $-V_T$, inductor current $I_{ind}$ ramps downward, and inductor 914 is charged with energy from capacitor 306. In phase $P2_h$, switching devices 910 and 912(1) are in their on-states, and switching devices 908 and 906 are in their off-states. Consequently, voltage $V_{ind}$ across inductor 914 is equal to $V_L(1) - V_T$. Voltage $V_T$ is greater than voltage $V_L(1)$ in the FIG. 14 example, and current $I_{ind}$ therefore continues to ramp downward in phase $P2_h$, albeit at a slower rate than in phase $P1_h$. Inductor 914 continues to be charged with energy from capacitor 306, as well as deliver energy to output port 316(1), in phase $P2_h$. It is understood, though, that if voltage $V_L(1)$ were instead greater than voltage $V_T$, inductor current $I_{ind}$ would ramp upward, instead of ramping downward, in phase $P2_h$. Additionally, inductor current $I_{ind}$ would be flat in phase $P2_h$ if voltage $V_T$ were equal to voltage $V_L(1)$. In phase $P3_h$, switching devices 908 and 912(1) are in their on-states, and switching devices 910 and 906 are in their off-states. Consequently, voltage $V_{ind}$ across inductor 914 is equal to $V_L(1)$ and current $I_{ind}$ ramps upward. Inductor 914 continues to deliver energy to output port 316(1), but inductor 914 is not charged from capacitor 306, in phase $P3_h$.

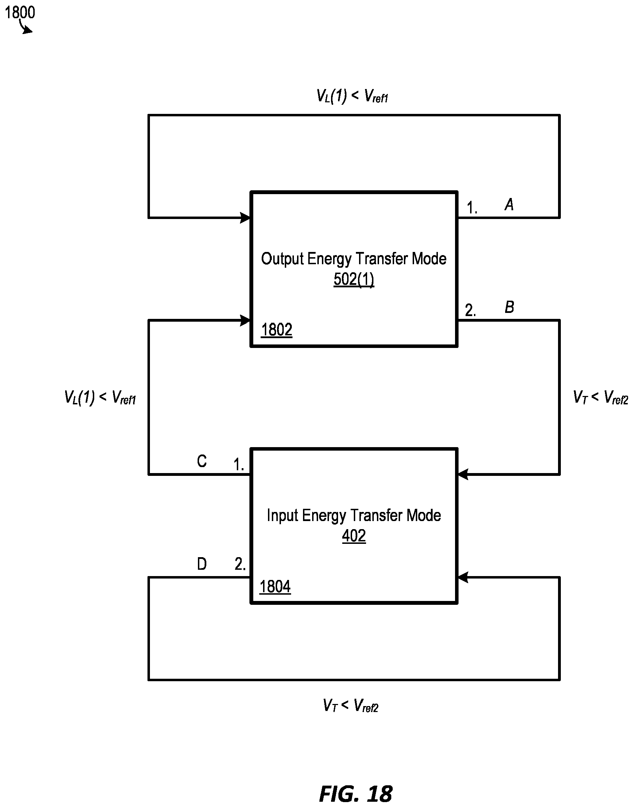

Referring again to FIG. 3, in particular embodiments, controller 322 is configured to cause DC-to-DC converter 320 to switch between energy transfer modes at least partially in response to magnitude of voltage and/or current at a port of power management device 302 crossing a threshold value. For example, FIG. 18 is a state diagram 1800 illustrating how some embodiments of controller 322 cause DC-to-DC converter 320 to transition between output energy transfer mode 502(1) and input energy transfer mode 402. State diagram 1800 includes two states of DC-to-DC converter 320, i.e., a state 1802 where DC-to-DC converter 320 operates in output energy transfer mode 502(1) to regulate voltage $V_L(1)$ to a value of $V_{ref1}$, and a state 1804 where DC-to-DC converter 320 operates in input energy transfer mode 402 to regulate voltage $V_T$ to a value of $V_{ref2}$. Two state decisions A and B are associated with state 1802, where state decision A is higher priority that state decision B, as shown in FIG. 18 by state decision A having a priority designation "1" and state decision B having a priority designation "2." Accordingly, DC-to-DC converter 320 remains in output energy transfer mode 502(1) whenever voltage $V_L(1)$ is less than $V_{ref1}$. On the other hand, if $V_L(1)$ is not less than $V_{ref1}$, and voltage $V_T$ is less than $V_{ref2}$, DC-to-DC converter 320 transitions from output energy transfer mode 502(1) to input energy transfer mode 402, as illustrated in state diagram 1800.

Additionally, two state decisions C and D are associated with state 1804, where state decision C is higher priority that state decision D, as shown in FIG. 18 by state decision C having a priority designation "1" and state decision D having a priority designation "2." Accordingly, DC-to-DC converter 320 transitions from input energy transfer mode 402 to output energy transfer mode 502(1) whenever voltage $V_L(1)$ is less than $V_{ref1}$. On the other hand, if $V_L(1)$ is not less than $V_{ref1}$, and voltage $V_T$ is less than $V_{ref2}$, DC-to-DC converter 320 remains in input energy transfer mode 402, as illustrated in state diagram 1800.

While state diagram 1800 only addresses a transition between output energy transfer mode 502(1) and input energy transfer mode 402, state diagram 1800 could be modified to address a transition between input energy transfer mode 402 and one or more other output energy transfer modes 502. Additionally, two or more output energy transfer modes 502 could be prioritized. Furthermore, state diagram 1800 could be modified to further include one or more transitions into or out of a discharge energy transfer mode 702.

Referring again to FIG. 3, in particular embodiments, DC-to-DC converter 320 can only transfer energy between two ports at a time. State differently, in these embodiments, DC-to-DC converter 320 can only operate in one energy transfer mode at a time. For example, DC-to-DC converter 320 cannot operate in output energy transfer mode 502(1) while operating in input energy transfer mode 402. As another example, DC-to-DC converter 320 cannot operate in output energy transfer mode 502(N) while operating in output energy transfer mode 502(1) (unless corresponding voltages $V_L(N)$ and $V_L(1)$ are identical). There may be times when two or more ports of power management device 302 require energy at a common time, and one port must wait for another port to be serviced, i.e., for energy to be transferred to the other port, before receiving energy via DC-to-DC converter 320, resulting in crosstalk between the ports.

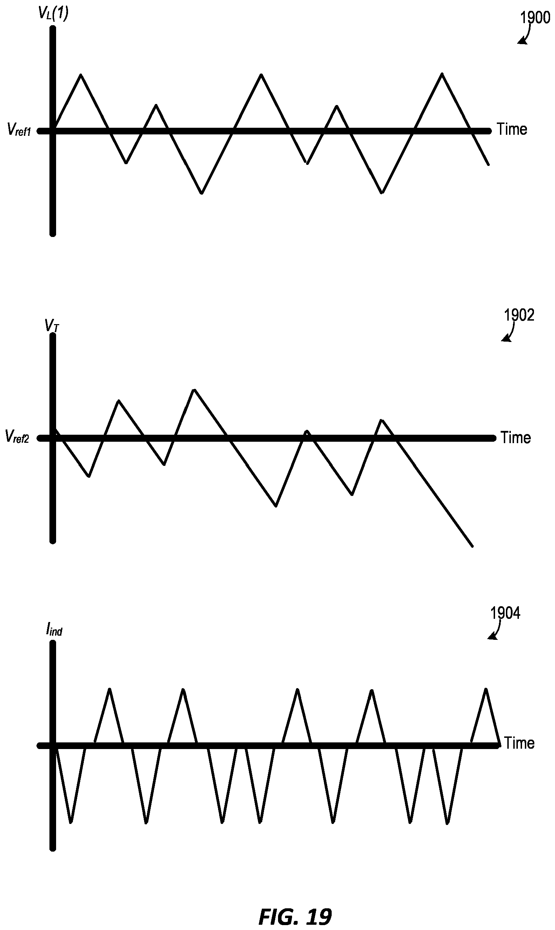

For example, FIG. 19 includes three graphs 1900, 1902, and 1904 illustrating one example of operation of electrical system 300 in an embodiment where controller 322 is configured to operate according to state diagram 1800 of FIG. 18. Graph 1900 is of voltage $V_L(1)$ versus time, graph 1902 is of voltage $V_T$ versus time, and graph 1904 is of inductor current $I_{ind}$ versus time. As evident from FIG. 19, crosstalk associated with servicing second input port 314, i.e., operating DC-to-DC converter 320 in input energy transfer mode 402 to charge capacitor 306, may create significant ripple in voltage $V_L(1)$, although an average value of voltage $V_L(1)$ is approximately equal to $V_{ref1}$.

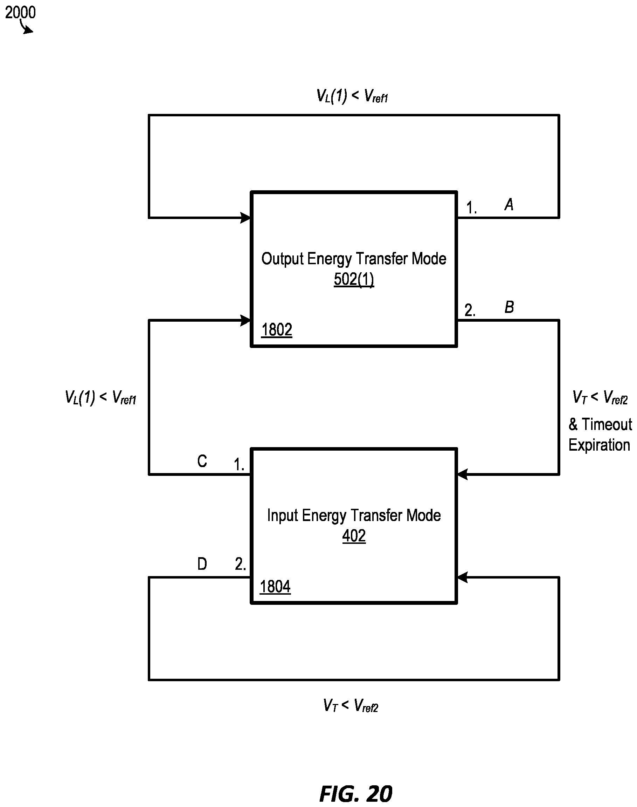

Crosstalk can be mitigated by delaying transition between energy transfer modes until expiration of a predetermined timeout period. For example, FIG. 20 is a state diagram 2000, which is an alternate embodiment of state diagram 1800 including an additional condition on the transition from output energy transfer mode 502(1) to input energy transfer mode 402. Specifically, not only must $V_L(1)$ not be less $V_{ref1}$ and $V_T$ be less than $V_{ref2}$, a predetermined timeout period must have expired before DC-to-DC converter 320 transitions from output energy transfer mode 502(1) to input energy transfer mode 402. Such timeout period may reduce crosstalk noise $V_{noise}$ in voltage $V_L(1)$ as specified by EQN. 3 below, where $V_{ripple}$ is ripple of voltage $V_L(1)$, $W_{pulse}$ is the switching period of DC-to-DC converter 320 in input energy transfer mode 402, and $T_{timeout}$ is the predetermined timeout period.

$$V_{noise} = V_{ripple} \cdot \left[ \frac{W_{pulse}}{T_{timeout}} \right] \quad \text{(EQN. 3)}$$

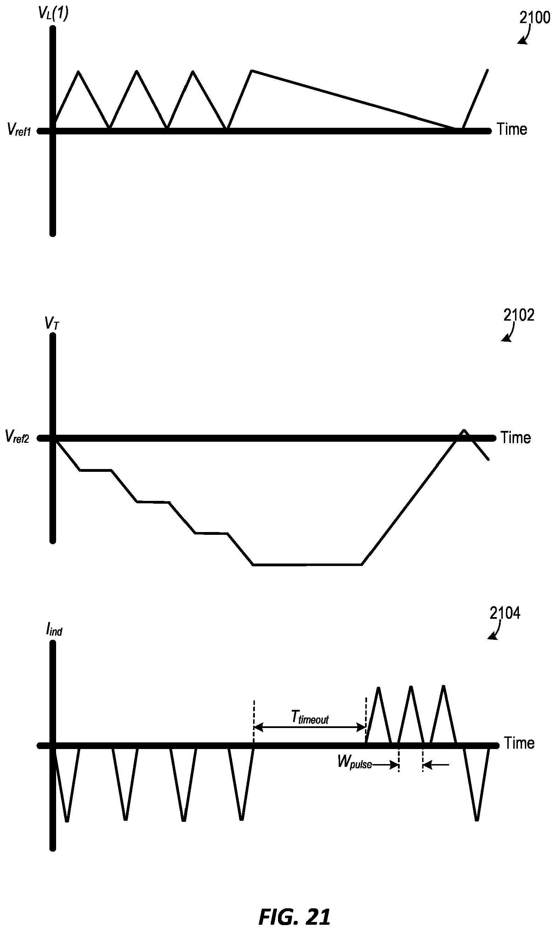

FIG. 21 includes three graphs 2100, 2102, and 2104 illustrating one example of operation of electrical system 300 in an embodiment where controller 322 is configured to operate according to state diagram 2000 of FIG. 20. Graph 2100 is of voltage $V_L(1)$ versus time, graph 2102 is of voltage $V_T$ versus time, and graph 2104 is of inductor current $I_{ind}$ versus time. As evident when comparing graph 2100 to graph 1900 (FIG. 19), implementation of the timeout period in state diagram 2000 significantly reduced ripple of voltage $V_L(1)$, with a cost of greater variation in voltage $V_T$, as evident when comparing graph 2102 to graph 1902 (FIG. 19).

## Combinations of Features

Features described above may be combined in various ways without departing from the scope hereof. The following examples illustrate some possible combinations.

(A1) A power management device including multiple input ports, the power management device including (1) a first input port configured to be electrically coupled to an energy source, (2) a second input port configured to be electrically coupled to a first capacitor, (3) a first output port configured to be electrically coupled to a first load, and (4) a direct-current-to-direct-current (DC-to-DC) converter configured to (i) charge the first capacitor from energy from the energy source and (ii) provide energy to the first output port at least partially using energy stored in the first capacitor.

(A2) In the power management device denoted as (A1), the DC-to-DC converter may be further configured to transfer energy stored in a second capacitor to the first capacitor, where the second capacitor is electrically coupled to the first output port.

(A3) In the power management device denoted as (A2), the DC-to-DC converter may be further configured to (1) charge the first capacitor from energy from the energy source, (2) provide energy to the first output port at least partially using energy stored in the first capacitor, and (3) transfer energy from the second capacitor to the first capacitor, using a common inductor of the DC-to-DC converter.

(A4) In either one of the power management devices denoted as (A1) or (A2), the DC-to-DC converter may be further configured to (1) charge the first capacitor from energy from the energy source and (2) provide energy to the first output port at least partially using energy stored in the first capacitor, using a common inductor of the DC-to-DC converter.

(A5) Any one of the power management devices denoted as (A1) through (A4) may further include a second output port, and the DC-to-DC converter may be further configured to provide energy to the second output port at least partially using energy stored in the first capacitor.

(A6) In any one of the power management devices denoted as (A1) through (A5), the DC-to-DC converter may include (1) a first switching device electrically coupled between the first input port and a first switching node, (2) a second switching device electrically coupled between the first switching node and a reference node, (3) an inductor electrically coupled between the first switching node and a second switching node, (4) a third switching device electrically coupled between the second switching node and the reference node, (5) a fourth switching device electrically coupled between the second switching node and the second input port, and (6) a fifth switching device electrically coupled between the first switching node and the first output port.

(A7) In any one of the power management devices denoted as (A1) through (A6), the DC-to-DC converter may include a buck-boost converter.

(B1) A method for powering one or more loads using a power management device includes (1) charging a first capacitor using energy from an energy source, using an inductor of a first direct-current-to-direct-current (DC-to-DC) converter, (2) providing energy to a first load from energy stored in the first capacitor, using the inductor of the first DC-to-DC converter, and (3) transferring energy stored in a second capacitor to the first capacitor, using the inductor of first DC-to-DC converter, where the second capacitor is electrically coupled to the first load.

(B2) The method denoted as (B1) may further include limiting of magnitude of current flowing from the energy source to the first capacitor, when charging the first capacitor using energy from the energy source.

(B3) In either one of the methods denoted as (B1) or (B2), a magnitude of a voltage across the first capacitor may be greater than a magnitude of a voltage across the energy source.

(B4) Any one of the methods denoted as (B1) through (B3) may further include providing energy to the first load from energy stored in the first capacitor in response to a voltage at the first load crossing a first threshold value.

(B5) Any one of the methods denoted as (B1) through (B4) may further include charging the first capacitor using energy from the energy source in response to both of (1) a voltage of the first capacitor crossing a second threshold value and (2) a timeout period expiring.

(B6) Any one of the methods denoted as (B1) through (B5) may further include providing energy to a second load from energy stored in the first capacitor, using the inductor of the first DC-to-DC converter.

(B7) The method denoted as (B6) may further include transferring energy stored in a third capacitor to the first capacitor, using the inductor of first DC-to-DC converter, where the third capacitor is electrically coupled to the second load.

(B8) In any one of the methods denoted as (B1) through (B7), the energy source may include a battery.

(B9) In any one of the methods denoted as (B1) through (B8), the energy source may include a buck-boost converter.

(C1) An electrical system includes (1) an energy source, (2) a first capacitor, (3) a first load, and (4) a power management device. The power management device includes (i) a first input port electrically coupled to the energy source, (ii) a second input port electrically coupled to the first capacitor, (iii) a first output port electrically coupled to the first load, and (iv) a direct-current-to-direct-current (DC-to-DC) converter configured to (a) charge the first capacitor from energy of the energy source, and (b) provide energy to the first load at least partially using energy stored in the first capacitor.

(C2) In the electrical system denoted as (C1), wherein the DC-to-DC converter may be further configured to transfer energy stored in a second capacitor to the first capacitor, where the second capacitor is electrically coupled to the first load.

(C3) In the electrical system denoted as (C2), the DC-to-DC converter may be further configured to (a) charge the first capacitor from energy of the energy source, (b) provide energy to the first load at least partially using energy stored in the first capacitor, and (c) transfer energy from the second capacitor to the first capacitor, using a common inductor of the DC-to-DC converter.

(C4) In either one of the electrical systems denoted as (C1) or (C2), the DC-to-DC converter may be further configured to (a) charge the first capacitor from energy of the energy source and (b) provide energy to the first load at least partially using energy stored in the first capacitor, using a common inductor of the DC-to-DC converter.

(C5) In any one of the electrical systems denoted as (C1) through (C4), (1) the electrical system may further include a second load, and (2) the DC-to-DC converter may be further configured to provide energy to the second load at least partially using energy stored in the first capacitor.

(C6) In any one of the electrical systems denoted as (C1) through (C5), the DC-to-DC converter may include (1) a first switching device electrically coupled between the energy source and a first switching node, (2) a second switching device electrically coupled between the first switching node and a reference node, (3) an inductor electrically coupled between the first switching node and a second switching node, (4) a third switching device electrically coupled between the second switching node and the reference node, (5) a fourth switching device electrically coupled between the second switching node and the first capacitor, and (6) a fifth switching device electrically coupled between the first switching node and the first load.

(C7) Any one of the electrical systems denoted as (C1) through (C6) may further include a controller configured to control operation of the DC-to-DC converter at least partially according (a) a voltage across the first capacitor and (b) a voltage at the first load.

(C8) In any one of the electrical systems denoted as (C1) through (C7), the energy source may include a battery.

(C9) In any one of the electrical systems denoted as (C1) through (C8), the DC-to-DC converter may include a buck-boost converter.

Changes may be made in the above methods, devices, and systems without departing from the scope hereof. It should thus be noted that the matter contained in the above description and shown in the accompanying drawings should be interpreted as illustrative and not in a limiting sense. The following claims are intended to cover generic and specific features described herein, as well as all statements of the scope of the present method and system, which as a matter of language, might be said to fall therebetween.

**Claims**

1.   A power management device including multiple input ports, the power management device comprising:

> a first input port configured to be electrically coupled to an energy source;
> a second input port configured to be electrically coupled to a first capacitor;
> a first output port configured to be electrically coupled to a first load; and
> a direct-current-to-direct-current (DC-to-DC) converter configured to:
>
> > charge the first capacitor from energy from the energy source, and
> > provide energy to the first output port at least partially using energy stored in the first capacitor.

2.   The power management device of claim 1, wherein the DC-to-DC converter is further configured to transfer energy stored in a second capacitor to the first capacitor, the second capacitor being electrically coupled to the first output port.

3.   The power management device of claim 2, wherein the DC-to-DC converter is further configured to (a) charge the first capacitor from energy from the energy source, (b) provide energy to the first output port at least partially using energy stored in the first capacitor, and (c) transfer energy from the second capacitor to the first capacitor, using a common inductor of the DC-to-DC converter.

4.   The power management device of any preceding claim, wherein the DC-to-DC converter is further configured to (a) charge the first capacitor from energy from the energy source and (b) provide energy to the first output port at least partially using energy stored in the first capacitor, using a common inductor of the DC-to-DC converter.

5.   The power management device of any preceding claim, further comprising a second output port, wherein the DC-to-DC converter is further configured to provide energy to the second output port at least partially using energy stored in the first capacitor.

6.   The power management device of any preceding claim, wherein the DC-to-DC converter comprises:

> a first switching device electrically coupled between the first input port and a first switching node;
> a second switching device electrically coupled between the first switching node and a reference node;
> an inductor electrically coupled between the first switching node and a second switching node;
> a third switching device electrically coupled between the second switching node and the reference node;
> a fourth switching device electrically coupled between the second switching node and the second input port; and
> a fifth switching device electrically coupled between the first switching node and the first output port.

7.   The power management device of any preceding claim, wherein the DC-to-DC converter comprises a buck-boost converter.

8. A method for powering one or more loads using a power management device, the method comprising:

charging a first capacitor using energy from an energy source, using an inductor of a first direct-current-to-direct-current (DC-to-DC) converter;

providing energy to a first load from energy stored in the first capacitor, using the inductor of the first DC-to-DC converter; and

transferring energy stored in a second capacitor to the first capacitor, using the inductor of first DC-to-DC converter, the second capacitor being electrically coupled to the first load.

9. The method of claim 8, further comprising limiting magnitude of current flowing from the energy source to the first capacitor, when charging the first capacitor using energy from the energy source.

10. The method of claim 8 or claim 9, wherein a magnitude of a voltage across the first capacitor is greater than a magnitude of a voltage across the energy source.

11. The method of any of claims 8 to 10, further comprising at least one of:

(A) providing energy to the first load from energy stored in the first capacitor in response to a voltage at the first load crossing a first threshold value;

(B) providing energy to a second load from energy stored in the first capacitor, using the inductor of the first DC-to-DC converter;

(C) transferring energy stored in a third capacitor to the first capacitor, using the inductor of first DC-to-DC converter, the third capacitor being electrically coupled to the second load.

12. The method of any of claims 8 to 11, further comprising charging the first capacitor using energy from the energy source in response to both of (a) a voltage of the first capacitor crossing a second threshold value and (b) a timeout period expiring.

13. The method of any of claims 8 to 12, wherein the energy source comprises a battery and/or the first DC-to-DC converter comprises a buck-boost converter.

14. An electrical system, comprising:

an energy source;
a first capacitor;
a first load; and
a power management device, the power management device including:

a first input port electrically coupled to the energy source,
a second input port electrically coupled to the first capacitor,
a first output port electrically coupled to the first load, and
a direct-current-to-direct-current (DC-to-DC) converter configured to (a) charge the first capacitor from energy of the energy source, and (b) provide energy to the first load at least partially using energy stored in the first capacitor.

15. The electrical system of claim 14, wherein at least one of the following applies:

(A) the DC-to-DC converter is further configured to transfer energy stored in a second capacitor to the first capacitor, the second capacitor being electrically coupled to the first load, and optionally wherein the DC-to-DC converter is further configured to (a) charge the first capacitor from energy of the energy source, (b) provide energy to the first load at least partially using energy stored in the first capacitor, and (c) transfer energy from the second capacitor to the first capacitor, using a common inductor of the DC-to-DC converter;

(B) the DC-to-DC converter is further configured to (a) charge the first capacitor from energy of the energy source and (b) provide energy to the first load at least partially using energy stored in the first capacitor, using a common inductor of the DC-to-DC converter.

**FIG. 1**

**FIG. 2A**

**FIG. 2B**

**FIG. 3**

300

$I_L(N)$

316(N) → Load 308(N)

310(N)
+
$V_L(N)$
-

318

DC-to-DC
Converter
320

324

$I_L(1)$

316(1) → Load 308(1)

310(1)
+
$V_L(1)$
-

318

**402**

$I_{es}$

304
+
$V_{es}$
-

318

312 → Lim. 328

$I_T$

314

306
+
$V_T$
-
318

326

Controller
322

Power Management Device 302

**FIG. 4**

300

DC-to-DC
Converter
320

324

316(N)

$I_L(N)$

Load
308(N)

310(N)

+
$V_L(N)$
-

318

502(1)

316(1)

$I_L(1)$

Load
308(1)

310(1)

+
$V_L(1)$
-

318

$I_{es}$

304

+
$V_{es}$
-

318

312

Lim.
328

314

$I_T$

306

+
$V_T$
-

318

326

Controller
322

Power Management Device 302

**FIG. 5**

**FIG. 6**

**FIG. 7**

**FIG. 8**

*FIG. 9*

EP 4 492 658 A1

**FIG. 10**

**FIG. 11**

**FIG. 12**

**FIG. 13**

**FIG. 14**

**FIG. 15**

**FIG. 16**

**FIG. 17**

1800

$V_L(1) < V_{ref1}$

1.    *A*

Output Energy Transfer Mode
502(1)

1802

2.    *B*

$V_L(1) < V_{ref1}$

$V_T < V_{ref2}$

*C*   1.

Input Energy Transfer Mode
402

*D*   2.

1804

$V_T < V_{ref2}$

**FIG. 18**

**FIG. 19**

2000

$V_L(1) < V_{ref1}$

1.     *A*

**Output Energy Transfer Mode**
**502(1)**

1802

2.     *B*

$V_L(1) < V_{ref1}$

$V_T < V_{ref2}$

& Timeout
Expiration

*C*   1.

**Input Energy Transfer Mode**
**402**

1804

*D*   2.

$V_T < V_{ref2}$

*FIG. 20*

**FIG. 21**

Europäisches
Patentamt

European
Patent Office

Office européen
des brevets

# EUROPEAN SEARCH REPORT

Application Number

EP 24 18 6671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/409442 A1 (URYU AKIRA [JP] ET AL) 31 December 2020 (2020-12-31) * abstract * * * paragraphs [0045] - [0057] * * figure 2 * | 1-15 | INV. H02M1/00 H02M3/158 |
| X | WU HONGFEI ET AL: "A Family of Multiport Buck-Boost Converters Based on DC-Link-Inductors (D", IEEE TRANSACTIONS ON POWER ELECTRONICS, INSTITUTE OF ELECTRICAL AND ELECTRONICS ENGINEERS, USA, vol. 30, no. 2, 1 February 2015 (2015-02-01), pages 735-746, XP011560847, ISSN: 0885-8993, DOI: 10.1109/TPEL.2014.2307883 [retrieved on 2014-10-07] * pages 1-3 * * page 8, last paragraph * | 1-15 | |

TECHNICAL FIELDS
SEARCHED      (IPC)

H02M

The present search report has been drawn up for all claims

| Place of search | Date of completion of the search | Examiner |
|---|---|---|
| The Hague | 27 November 2024 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 6671

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 2020409442 A1 | 31-12-2020 | JP 7372767 B2 | 01-11-2023 |
| | | JP 2021005924 A | 14-01-2021 |
| | | US 2020409442 A1 | 31-12-2020 |

EPO FORM P0459

For more details about this annex : see Official Journal of the European Patent Office, No. 12/82